# EUROPEAN PATENT APPLICATION

(11) **EP 4 618 662 A1**
(43) Date of publication of application: **17.09.2025**
(21) Application number: 23896812.7
(22) Date of filing: 29.11.2023
(51) Int. Cl.: H04W 72/044

(54) **POWER INDICATION METHOD AND COMMUNICATION APPARATUS**

(30) Priority: 29.11.2022 CN 202211510868
(71) Applicant: Huawei Technologies Co., Ltd., Shenzhen, Guangdong 518129 (CN)
(72) Inventor: GAN, Ming, Shenzhen, Guangdong 518129 (CN); HUANG, Guogang, Shenzhen, Guangdong 518129 (CN); LIN, Yousi, Shenzhen, Guangdong 518129 (CN); MAO, Zhi, Shenzhen, Guangdong 518129 (CN); YANG, Xun, Shenzhen, Guangdong 518129 (CN)
(74) Representative: Grünecker Patent- und Rechtsanwälte PartG mbB
(86) International application number: PCT/CN2023/134933
(87) International publication number: WO 2024/114668

(57) **Abstract**

Embodiments of this application are applied to, for example, a wireless local area network system that supports 802.11 series protocols such as a next-generation Wi-Fi protocol of IEEE 802.11ax, for example, 802.11be, Wi-Fi 7, or EHT and a next-generation protocol of 802.1 1be, for example, Wi-Fi 8, UHR, or Wi-Fi AI, and may be further applied to a UWB-based wireless personal area network system, a sensing system, or the like. Embodiments of this application provide a power indication method and a communication apparatus. In the method, a transmit end device generates a first frame including N pieces of first information, where the N pieces of first information can indicate maximum transmit PSDs corresponding to two types of BSS operating channel bandwidths. Different types of receive end devices can obtain maximum transmit PSDs corresponding to their own BSS operating channel bandwidths, so that transmission overheads are reduced when the maximum transmit PSDs corresponding to the two types of BSS operating channel bandwidths are reliably indicated.

## Description

This application claims priority to Chinese Patent Application No. 202211510868.7, filed with the China National Intellectual Property Administration on November 29, 2022 and entitled "POWER INDICATION METHOD AND COMMUNICATION APPARATUS", which is incorporated herein by reference in its entirety.

### TECHNICAL FIELD

This application relates to the communication field, and more specifically, to a power indication method and a communication apparatus.

### BACKGROUND

When stations in a basic service set (basic service set, BSS) communicate with each other, access point (access point, AP) stations may notify all non-access point stations (non-access point stations, non-AP STAs) of maximum power spectral densities (power spectral densities, PSDs) corresponding to BSS operating channels. For example, the AP may broadcast a beacon (beacon) frame or a probe response frame that carries a transmit power envelope element. Each non-AP STA can learn of, based on the transmit power envelope element, a maximum transmit PSD corresponding to its own BSS operating channel bandwidth.

However, in a current protocol, the transmit power envelope element is designed based on a non-extremely high throughput (extremely high throughput, EHT) station. In other words, a current transmit power envelope element can indicate a maximum transmit PSD corresponding to a segment of continuous small bandwidths, for example, a 20 MHz, 40 MHz, or 80 MHz bandwidth, that is, can indicate a maximum transmit PSD corresponding to a non-EHT BSS operating channel bandwidth, but cannot indicate a maximum transmit PSD corresponding to an ETH BSS operating channel bandwidth.

To indicate the maximum transmit PSD corresponding to the ETH BSS operating channel bandwidth, a current method is that the AP broadcasts another element indicating the maximum transmit PSD corresponding to the ETH BSS operating channel bandwidth. However, this method may cause confusion to the non-ETH station. For example, when receiving an element indicating a transmit power limit of the ETH BSS operating channel bandwidth, the non-ETH station may mistakenly consider that the element is used to replace a previously received element indicating a transmit power limit of the non-ETH BSS operating channel bandwidth. In addition, this method also causes large transmission overheads. Therefore, a power indication method and a communication apparatus are urgently needed, to reduce transmission overheads when maximum transmit PSDs corresponding to the two types of BSS operating channel bandwidths are reliably indicated.

### SUMMARY

This application provides a power indication method and a communication apparatus, to reduce transmission overheads when maximum transmit PSDs corresponding to two types of BSS operating channel bandwidths are reliably indicated.

According to a first aspect, a communication method is provided. The method may be performed by a transmit end, or may be performed through a chip or a circuit configured in the transmit end device. This is not limited in this application. For ease of description, an example in which the method is performed by the transmit end device is used below for description.

The method may include: generating a first frame, where the first frame includes a first element, the first element includes N pieces of first information, the N pieces of first information indicate respectively maximum transmit power spectral densities PSDs corresponding to N fundamental channels, first X fundamental channels in the N fundamental channels correspond to fundamental channels in a first basic service set operating channel bandwidth, and an (X+1)^{th} fundamental channel to an N^{th} fundamental channel in the N fundamental channels are fundamental channels in an indicated bandwidth excluding the X fundamental channels, where the indicated bandwidth is related to a value of N and a second basic service set operating channel bandwidth, the second basic service set operating channel bandwidth is different from the first basic service set operating channel bandwidth, N and X are positive integers, and N is greater than X; and sending the first frame.

Based on the technical solution, the N pieces of first information are designed by defining the indicated bandwidth, so that the N pieces of first information can simultaneously indicate maximum transmit PSDs corresponding to fundamental channels in two types of BSS operating channel bandwidths. Different types of receive end devices, for example, both an EHT station and a non-EHT station, can obtain, based on the N pieces of first information, maximum transmit PSDs corresponding to fundamental channels in their own BSS operating channel bandwidths. In this solution, a plurality of types of frames or elements may not be additionally defined to indicate maximum transmit PSDs corresponding to fundamental channels in different BSS operating channel bandwidths, so that transmission overheads are reduced when the maximum transmit PSDs corresponding to the two types of BSS operating channel bandwidths are reliably indicated.

It should be noted that, that the first basic service set operating channel bandwidth is different from the second basic service set operating channel bandwidth may be as follows: A size of the first basic service set operating channel bandwidth is different from a size of the second basic service set operating channel bandwidth, or a number of the fundamental channels in the first basic service set operating channel bandwidth is different from a number of the fundamental channels in the second basic service set operating channel bandwidth. For example, the first basic service set operating channel bandwidth is a 40 MHz bandwidth including two fundamental channels, and the second basic service set operating channel bandwidth is a 320 MHz bandwidth including 16 fundamental channels.

With reference to the first aspect, in some implementations of the first aspect, fundamental channels in the second basic service set operating channel bandwidth include fundamental channels in the first basic service set operating channel bandwidth.

With reference to the first aspect, in some implementations of the first aspect, first X pieces of first information in the N pieces of first information are sorted sequentially in ascending order of frequencies of the corresponding fundamental channels.

With reference to the first aspect, in some implementations of the first aspect, an (X+1)^{th} piece of first information to an N^{th} piece of first information in the N pieces of first information are sorted sequentially in ascending order of frequencies of the corresponding fundamental channels.

Based on the technical solution, the pieces of first information are sorted, so that the receive end can determine, based on positions of the pieces of first information, the maximum transmit PSDs corresponding to the fundamental channels, and no additional bit is required to indicate a specific correspondence between the fundamental channels and the pieces of first information, thereby further reducing transmission overheads.

With reference to the first aspect, in some implementations of the first aspect, N is equal to a first value, and the indicated bandwidth is a second basic service set operating channel bandwidth, where the first value is a number of fundamental channels included in the second basic service set operating channel bandwidth.

With reference to the first aspect, in some implementations of the first aspect, N is less than a first value, the indicated bandwidth is primary Z megahertz in the second basic service set operating channel bandwidth, Z is equal to N multiplied by a fundamental channel bandwidth, and the first value is a number of the fundamental channels included in the second basic service set operating channel bandwidth.

With reference to the first aspect, in some implementations of the first aspect, N is greater than a first value, the indicated bandwidth is greater than a second basic service set operating channel bandwidth, first Y pieces of first information in the N pieces of first information indicate maximum transmit PSDs corresponding to Y fundamental channels included in the second basic service set operating channel bandwidth, Y is a positive integer, and the first value is a number of the fundamental channels included in the second basic service set operating channel bandwidth.

Based on the technical solution, the receive end device may interpret the first information based on different values of N, to obtain maximum transmit PSDs corresponding to fundamental channels in its own BSS operating channel bandwidth. An indication manner is flexible.

With reference to the first aspect, in some implementations of the first aspect, an (Y+1)^{th} piece of first information to an N^{th} piece of first information in the N pieces of first information are reserved.

With reference to the first aspect, in some implementations of the first aspect, a bandwidth size of the fundamental channel is 20 megahertz MHz.

With reference to the first aspect, in some implementations of the first aspect, the first element further includes a maximum transmit power number field, and the maximum transmit power number field indicates a value of N.

With reference to the first aspect, in some implementations of the first aspect, the first element further includes a maximum transmit power interpretation field, and a value of the maximum transmit power interpretation field is 1 or 3.

With reference to the first aspect, in some implementations of the first aspect, the first element is a transmit power envelope element.

With reference to the first aspect, in some implementations of the first aspect, the first basic service set operating channel bandwidth is a non-extremely high throughput EHT basic service set operating channel bandwidth, and the second basic service set operating channel bandwidth is an EHT basic service set operating channel bandwidth.

With reference to the first aspect, in some implementations of the first aspect, the value of N is 2 to the power of n, and n is an integer greater than or equal to 0.

According to a second aspect, a communication method is provided. The method may be performed by a receive end, or may be performed through a chip or a circuit configured in the receive end device. This is not limited in this application. For ease of description, an example in which the method is performed by a first receive end device is used below for description.

The method includes: receiving a first frame, where the first frame includes a first element, the first element includes N pieces of first information, the N pieces of first information indicate respectively maximum transmit power spectral densities PSDs corresponding to N fundamental channels, first X fundamental channels in the N fundamental channels correspond to fundamental channels in a first basic service set operating channel bandwidth, and an (X+1)^{th} fundamental channel to an N^{th} fundamental channel in the N fundamental channels are fundamental channels in an indicated bandwidth excluding the X fundamental channels, where the indicated bandwidth is related to a value of N and a second basic service set operating channel bandwidth, the second basic service set operating channel bandwidth is different from the first basic service set operating channel bandwidth, N and X are positive integers, and N is greater than X; and determining, based on the first frame, maximum transmit PSDs corresponding to fundamental channels in the second basic service set operating channel bandwidth.

The implementations of the second aspect are the methods of the first receive end device corresponding to the implementations of the first aspect. For technical effects of the implementations, refer to the descriptions of the first aspect. Details are not described herein again.

With reference to the second aspect, in some implementations of the second aspect, fundamental channels in the second basic service set operating channel bandwidth include fundamental channels in the first basic service set operating channel bandwidth.

With reference to the second aspect, in some implementations of the second aspect, first X pieces of first information in the N pieces of first information are sorted sequentially in ascending order of frequencies of the corresponding fundamental channels.

With reference to the second aspect, in some implementations of the second aspect, an (X+1)^{th} piece of first information to an N^{th} piece of first information in the N pieces of first information are sorted sequentially in ascending order of frequencies of the corresponding fundamental channels.

With reference to the second aspect, in some implementations of the second aspect, N is equal to a first value, and the indicated bandwidth is a second basic service set operating channel bandwidth, where the first value is a number of fundamental channels included in the second basic service set operating channel bandwidth.

With reference to the second aspect, in some implementations of the second aspect, N is less than a first value, the indicated bandwidth is primary Z megahertz in the second basic service set operating channel bandwidth, Z is equal to N multiplied by a fundamental channel bandwidth, and the first value is a number of the fundamental channels included in the second basic service set operating channel bandwidth.

With reference to the second aspect, in some implementations of the second aspect, N is greater than a first value, the indicated bandwidth is greater than a second basic service set operating channel bandwidth, first Y pieces of first information in the N pieces of first information indicate maximum transmit PSDs corresponding to Y fundamental channels included in the second basic service set operating channel bandwidth, Y is a positive integer, and the first value is a number of the fundamental channels included in the second basic service set operating channel bandwidth.

With reference to the second aspect, in some implementations of the second aspect, an (Y+1)^{th} piece of first information to an N^{th} piece of first information in the N pieces of first information are reserved.

With reference to the second aspect, in some implementations of the second aspect, a bandwidth size of the fundamental channel is 20 megahertz MHz.

With reference to the second aspect, in some implementations of the second aspect, the first element further includes a maximum transmit power number field, and the maximum transmit power number field indicates a value of N.

With reference to the second aspect, in some implementations of the second aspect, the first element further includes a maximum transmit power interpretation field, and a value of the maximum transmit power interpretation field is 1 or 3.

With reference to the second aspect, in some implementations of the second aspect, the first element is a transmit power envelope element.

With reference to the second aspect, in some implementations of the second aspect, the first basic service set operating channel bandwidth is a non-extremely high throughput EHT basic service set operating channel bandwidth, and the second basic service set operating channel bandwidth is an EHT basic service set operating channel bandwidth.

With reference to the second aspect, in some implementations of the second aspect, the value of N is 2 to the power of n, and n is an integer greater than or equal to 0.

With reference to the second aspect, in some implementations of the second aspect, the first receive end device is an EHT station.

According to a third aspect, a communication method is provided. The method may be performed by a receive end, or may be performed through a chip or a circuit configured in the receive end device. This is not limited in this application. For ease of description, an example in which the method is performed by a second receive end device is used below for description.

The method includes: receiving a first frame, where the first frame includes a first element, the first element includes N pieces of first information, the N pieces of first information indicate respectively maximum transmit power spectral densities PSDs corresponding to N fundamental channels, first X fundamental channels in the N fundamental channels correspond to fundamental channels in a first basic service set operating channel bandwidth, and an (X+1)^{th} fundamental channel to an N^{th} fundamental channel in the N fundamental channels are fundamental channels in an indicated bandwidth excluding the X fundamental channels, where the indicated bandwidth is related to a value of N and a second basic service set operating channel bandwidth, the second basic service set operating channel bandwidth is different from the first basic service set operating channel bandwidth, N and X are positive integers, and N is greater than X; and determining, based on the first frame, maximum transmit PSDs corresponding to fundamental channels in the first basic service set operating channel bandwidth.

The implementations of the third aspect are the methods of the second receive end device corresponding to the implementations of the first aspect. For technical effects of the implementations, refer to the descriptions of the first aspect. Details are not described herein again.

With reference to the third aspect, in some implementations of the third aspect, fundamental channels in the second basic service set operating channel bandwidth include fundamental channels in the first basic service set operating channel bandwidth.

With reference to the third aspect, in some implementations of the third aspect, first X pieces of first information in the N pieces of first information are sorted sequentially in ascending order of frequencies of the corresponding fundamental channels.

With reference to the third aspect, in some implementations of the third aspect, an (X+1)^{th} piece of first information to an N^{th} piece of first information in the N pieces of first information are sorted sequentially in ascending order of frequencies of the corresponding fundamental channels.

With reference to the third aspect, in some implementations of the third aspect, N is equal to a first value, and the indicated bandwidth is a second basic service set operating channel bandwidth, where the first value is a number of fundamental channels included in the second basic service set operating channel bandwidth.

With reference to the third aspect, in some implementations of the third aspect, N is less than a first value, the indicated bandwidth is primary Z megahertz in the second basic service set operating channel bandwidth, Z is equal to N multiplied by a fundamental channel bandwidth, and the first value is a number of the fundamental channels included in the second basic service set operating channel bandwidth.

With reference to the third aspect, in some implementations of the third aspect, N is greater than a first value, the indicated bandwidth is greater than a second basic service set operating channel bandwidth, first Y pieces of first information in the N pieces of first information indicate maximum transmit PSDs corresponding to Y fundamental channels included in the second basic service set operating channel bandwidth, Y is a positive integer, and the first value is a number of the fundamental channels included in the second basic service set operating channel bandwidth.

With reference to the third aspect, in some implementations of the third aspect, an (Y+1)^{th} piece of first information to an N^{th} piece of first information in the N pieces of first information are reserved.

With reference to the third aspect, in some implementations of the third aspect, a bandwidth size of the fundamental channel is 20 megahertz MHz.

With reference to the third aspect, in some implementations of the third aspect, the first element further includes a maximum transmit power number field, and the maximum transmit power number field indicates a value of N.

With reference to the third aspect, in some implementations of the third aspect, the first element further includes a maximum transmit power interpretation field, and a value of the maximum transmit power interpretation field is 1 or 3.

With reference to the third aspect, in some implementations of the third aspect, the first element is a transmit power envelope element.

With reference to the third aspect, in some implementations of the third aspect, the first basic service set operating channel bandwidth is a non-extremely high throughput EHT basic service set operating channel bandwidth, and the second basic service set operating channel bandwidth is an EHT basic service set operating channel bandwidth.

With reference to the third aspect, in some implementations of the third aspect, the value of N is 2 to the power of n, and n is an integer greater than or equal to 0.

With reference to the third aspect, in some implementations of the third aspect, the second receive end device is a non-EHT station.

According to a fourth aspect, a communication method is provided. The method may be performed by a transmit end, or may be performed through a chip or a circuit configured in the transmit end device. This is not limited in this application. For ease of description, an example in which the method is performed by the transmit end device is used below for description.

The method includes: generating a first frame, where the first frame includes a first element, the first element includes P pieces of first information and Q pieces of second information, the P pieces of first information indicate respectively maximum transmit power spectral densities PSDs corresponding to P fundamental channels, the P fundamental channels are some or all of fundamental channels in a first basic service set operating channel bandwidth, the Q pieces of second information indicate respectively maximum transmit PSDs corresponding to fundamental channels in an indicated bandwidth excluding the P fundamental channels, and P and Q are positive integers; the indicated bandwidth is related to a value of M and a second basic service set operating channel bandwidth, the second basic service set operating channel bandwidth is different from the first basic service set operating channel bandwidth, M is equal to a sum of P and Q, and M is a positive integer; and the first element further includes third information and fourth information, the third information indicates a value of P, and the fourth information indicates a value of Q; and sending the first frame.

Based on the technical solution, the P pieces of first information are defined to indicate the maximum transmit PSDs corresponding to some or all of the fundamental channels in the first BSS operating channel bandwidth, and the Q pieces of second information are defined by designing the indicated bandwidth, so that the P pieces of first information and the Q pieces of second information can indicate maximum transmit PSDs corresponding to some or all of fundamental channels in the second BSS operating channel bandwidth, so that different types of receive end devices, for example, both an EHT station and a non-EHT station, can obtain, based on the first element, maximum transmit PSDs corresponding to fundamental channels in their own BSS operating channel bandwidths. In this solution, a plurality of types of frames or elements may not be additionally defined to indicate maximum transmit PSDs corresponding to fundamental channels in different BSS operating channel bandwidths, so that transmission overheads are reduced when the maximum transmit PSDs corresponding to the two types of BSS operating channel bandwidths are reliably indicated. In addition, the value of P is indicated based on the third information, and designing of the first information is more flexible, that is, the manner of indicating the first BSS operating channel bandwidth is more flexible.

With reference to the fourth aspect, in some implementations of the fourth aspect, fundamental channels in the second basic service set operating channel bandwidth include the fundamental channels in the first basic service set operating channel bandwidth.

With reference to the fourth aspect, in some implementations of the fourth aspect, the P pieces of first information are sorted sequentially in ascending order of frequencies of the corresponding fundamental channels.

With reference to the fourth aspect, in some implementations of the fourth aspect, the Q pieces of second information are sorted sequentially in ascending order of frequencies of the corresponding fundamental channels.

Based on the technical solution, the pieces of first information and the pieces of second information are separately sorted, so that the receive end can determine, based on positions of the pieces of first information and the pieces of second information, the maximum transmit PSDs corresponding to the fundamental channels, and no additional bit is required to indicate a specific correspondence between the fundamental channels and the pieces of information, thereby further reducing transmission overheads.

With reference to the fourth aspect, in some implementations of the fourth aspect, M is equal to a first value, the indicated bandwidth is the second basic service set operating channel bandwidth, and the first value is a number of the fundamental channels included in the second basic service set operating channel bandwidth.

With reference to the fourth aspect, in some implementations of the fourth aspect, M is less than a first value, the indicated bandwidth is primary Z megahertz in the second basic service set operating channel bandwidth, Z is equal to M multiplied by a fundamental channel bandwidth, and the first value is a number of the fundamental channels included in the second basic service set operating channel bandwidth.

With reference to the fourth aspect, in some implementations of the fourth aspect, M is greater than a first value, the indicated bandwidth is greater than the second basic service set operating channel bandwidth, first S pieces of information in M pieces of information in total of the P pieces of first information and the Q pieces of second information indicate respectively maximum transmit PSDs corresponding to S fundamental channels included in the second basic service set operating channel bandwidth, S is a positive integer, the first value is a number of the fundamental channels included in the second basic service set operating channel bandwidth, and S is greater than P.

Based on the technical solution, the receive end device may interpret the first information based on different values of N, to obtain maximum transmit PSDs corresponding to fundamental channels in its own BSS operating channel bandwidth. An indication manner is flexible.

With reference to the fourth aspect, in some implementations of the fourth aspect, an (S+1)^{th} piece of information to a (P+Q)^{th} piece of information in the M pieces of information in total of the P pieces of first information and the Q pieces of second information are reserved.

With reference to the fourth aspect, in some implementations of the fourth aspect, a bandwidth size of the fundamental channel is 20 megahertz MHz.

With reference to the fourth aspect, in some implementations of the fourth aspect, the first element further includes a maximum transmit power interpretation field, and a value of the maximum transmit power interpretation field is 1 or 3.

With reference to the fourth aspect, in some implementations of the fourth aspect, the first element is a transmit power envelope element.

With reference to the fourth aspect, in some implementations of the fourth aspect, the first basic service set operating channel bandwidth is a non-extremely high throughput EHT basic service set operating channel bandwidth, and the second basic service set operating channel bandwidth is an EHT basic service set operating channel bandwidth.

With reference to the fourth aspect, in some implementations of the fourth aspect, the value of M is 2 to the power of m, and m is an integer greater than or equal to 0.

According to a fifth aspect, a communication method is provided. The method may be performed by a receive end, or may be performed through a chip or a circuit configured in the receive end device. This is not limited in this application. For ease of description, an example in which the method is performed by a first receive end device is used below for description.

The method includes: receiving a first frame, where the first frame includes a first element, the first element includes P pieces of first information and Q pieces of second information, the P pieces of first information indicate respectively maximum transmit power spectral densities PSDs corresponding to P fundamental channels, the P fundamental channels are some or all of fundamental channels in a first basic service set operating channel bandwidth, the Q pieces of second information indicate respectively maximum transmit PSDs corresponding to fundamental channels in an indicated bandwidth excluding the P fundamental channels, and P and Q are positive integers; the first element further includes third information and fourth information, the third information indicates a value of P, and the fourth information indicates a value of Q; and the indicated bandwidth is related to a value of M and a second basic service set operating channel bandwidth, the second basic service set operating channel bandwidth is different from the first basic service set operating channel bandwidth, M is equal to a sum of P and Q, and M is a positive integer; and determining, based on the first frame, maximum transmit PSDs corresponding to fundamental channels in the second basic service set operating channel bandwidth.

With reference to the fifth aspect, in some implementations of the fifth aspect, fundamental channels in the second basic service set operating channel bandwidth include the fundamental channels in the first basic service set operating channel bandwidth.

With reference to the fifth aspect, in some implementations of the fifth aspect, the P pieces of first information are sorted sequentially in ascending order of frequencies of the corresponding fundamental channels.

With reference to the fifth aspect, in some implementations of the fifth aspect, the Q pieces of second information are sorted sequentially in ascending order of frequencies of the corresponding fundamental channels.

With reference to the fifth aspect, in some implementations of the fifth aspect, M is equal to a first value, the indicated bandwidth is the second basic service set operating channel bandwidth, and the first value is a number of the fundamental channels included in the second basic service set operating channel bandwidth.

With reference to the fifth aspect, in some implementations of the fifth aspect, M is less than a first value, the indicated bandwidth is primary Z megahertz in the second basic service set operating channel bandwidth, Z is equal to M multiplied by a fundamental channel bandwidth, and the first value is a number of the fundamental channels included in the second basic service set operating channel bandwidth.

With reference to the fifth aspect, in some implementations of the fifth aspect, M is greater than a first value, the indicated bandwidth is greater than the second basic service set operating channel bandwidth, first S pieces of information in M pieces of information in total of the P pieces of first information and the Q pieces of second information indicate respectively maximum transmit PSDs corresponding to S fundamental channels included in the second basic service set operating channel bandwidth, S is a positive integer, the first value is a number of the fundamental channels included in the second basic service set operating channel bandwidth, and S is greater than P.

With reference to the fifth aspect, in some implementations of the fifth aspect, an (S+1)^{th} piece of information to a (P+Q)^{th} piece of information in the M pieces of information in total of the P pieces of first information and the Q pieces of second information are reserved.

With reference to the fifth aspect, in some implementations of the fifth aspect, a bandwidth size of the fundamental channel is 20 megahertz MHz.

With reference to the fifth aspect, in some implementations of the fifth aspect, the first element further includes a maximum transmit power interpretation field, and a value of the maximum transmit power interpretation field is 1 or 3.

With reference to the fifth aspect, in some implementations of the fifth aspect, the first element is a transmit power envelope element.

With reference to the fifth aspect, in some implementations of the fifth aspect, the first basic service set operating channel bandwidth is a non-extremely high throughput EHT basic service set operating channel bandwidth, and the second basic service set operating channel bandwidth is an EHT basic service set operating channel bandwidth.

With reference to the fifth aspect, in some implementations of the fifth aspect, the value of M is 2 to the power of m, and m is an integer greater than or equal to 0.

With reference to the fifth aspect, in some implementations of the fifth aspect, the first receive end device is an EHT station.

According to a sixth aspect, a communication method is provided. The method may be performed by a receive end, or may be performed through a chip or a circuit configured in the receive end device. This is not limited in this application. For ease of description, an example in which the method is performed by a second receive end device is used below for description.

The method includes: receiving a first frame, where the first frame includes a first element, the first element includes P pieces of first information and Q pieces of second information, the P pieces of first information indicate respectively maximum transmit power spectral densities PSDs corresponding to P fundamental channels, the P fundamental channels are some or all of fundamental channels in a first basic service set operating channel bandwidth, the Q pieces of second information indicate respectively maximum transmit PSDs corresponding to fundamental channels in an indicated bandwidth excluding the P fundamental channels, and P and Q are positive integers; the first element further includes third information and fourth information, the third information indicates a value of P, and the fourth information indicates a value of Q; and the indicated bandwidth is related to a value of M and a second basic service set operating channel bandwidth, the second basic service set operating channel bandwidth is different from the first basic service set operating channel bandwidth, M is equal to a sum of P and Q, and M is a positive integer; and determining, based on the first frame, maximum transmit PSDs corresponding to fundamental channels in a first basic service set operating channel.

With reference to the sixth aspect, in some implementations of the sixth aspect, fundamental channels in the second basic service set operating channel bandwidth include the fundamental channels in the first basic service set operating channel bandwidth.

With reference to the sixth aspect, in some implementations of the sixth aspect, the P pieces of first information are sorted sequentially in ascending order of frequencies of the corresponding fundamental channels.

With reference to the sixth aspect, in some implementations of the sixth aspect, the Q pieces of second information are sorted sequentially in ascending order of frequencies of the corresponding fundamental channels.

With reference to the sixth aspect, in some implementations of the sixth aspect, M is equal to a first value, the indicated bandwidth is the second basic service set operating channel bandwidth, and the first value is a number of the fundamental channels included in the second basic service set operating channel bandwidth.

With reference to the sixth aspect, in some implementations of the sixth aspect, M is less than a first value, the indicated bandwidth is primary Z megahertz in the second basic service set operating channel bandwidth, Z is equal to M multiplied by a fundamental channel bandwidth, and the first value is a number of the fundamental channels included in the second basic service set operating channel bandwidth.

With reference to the sixth aspect, in some implementations of the sixth aspect, M is greater than a first value, the indicated bandwidth is greater than the second basic service set operating channel bandwidth, first S pieces of information in M pieces of information in total of the P pieces of first information and the Q pieces of second information indicate respectively maximum transmit PSDs corresponding to S fundamental channels included in the second basic service set operating channel bandwidth, S is a positive integer, the first value is a number of the fundamental channels included in the second basic service set operating channel bandwidth, and S is greater than P.

With reference to the sixth aspect, in some implementations of the sixth aspect, an (S+1)^{th} piece of information to a (P+Q)^{th} piece of information in the M pieces of information in total of the P pieces of first information and the Q pieces of second information are reserved.

With reference to the sixth aspect, in some implementations of the sixth aspect, a bandwidth size of the fundamental channel is 20 megahertz MHz.

With reference to the sixth aspect, in some implementations of the sixth aspect, the first element further includes a maximum transmit power interpretation field, and a value of the maximum transmit power interpretation field is 1 or 3.

With reference to the sixth aspect, in some implementations of the sixth aspect, the first element is a transmit power envelope element.

With reference to the sixth aspect, in some implementations of the sixth aspect, the first basic service set operating channel bandwidth is a non-extremely high throughput EHT basic service set operating channel bandwidth, and the second basic service set operating channel bandwidth is an EHT basic service set operating channel bandwidth.

With reference to the sixth aspect, in some implementations of the sixth aspect, the value of M is 2 to the power of m, and m is an integer greater than or equal to 0.

With reference to the sixth aspect, in some implementations of the sixth aspect, the first receive end device is an EHT station.

According to a seventh aspect, a communication apparatus is provided. The communication apparatus includes a processing unit and a communication unit. The processing unit is configured to generate a first frame, where the first frame includes a first element, the first element includes N pieces of first information, the N pieces of first information indicate respectively maximum transmit power spectral densities PSDs corresponding to N fundamental channels, first X fundamental channels in the N fundamental channels correspond to fundamental channels in a first basic service set operating channel bandwidth, and an (X+1)^{th} fundamental channel to an N^{th} fundamental channel in the N fundamental channels are fundamental channels in an indicated bandwidth excluding the X fundamental channels, where the indicated bandwidth is related to a value of N and a second basic service set operating channel bandwidth, the second basic service set operating channel bandwidth is different from the first basic service set operating channel bandwidth, N and X are positive integers, and N is greater than X. The communication unit is configured to send the first frame.

The implementations of the seventh aspect are the communication apparatus corresponding to the implementations of the first aspect. The communication apparatus provided in the seventh aspect can perform any one of the first aspect and the possible implementations of the first aspect.

According to an eighth aspect, a communication apparatus is provided. The communication apparatus includes a communication unit and a processing unit. The communication unit is configured to receive a first frame, where the first frame includes a first element, the first element includes N pieces of first information, the N pieces of first information indicate respectively maximum transmit power spectral densities PSDs corresponding to N fundamental channels, first X fundamental channels in the N fundamental channels correspond to fundamental channels in a first basic service set operating channel bandwidth, and an (X+1)^{th} fundamental channel to an N^{th} fundamental channel in the N fundamental channels are fundamental channels in an indicated bandwidth excluding the X fundamental channels, where the indicated bandwidth is related to a value of N and a second basic service set operating channel bandwidth, the second basic service set operating channel bandwidth is different from the first basic service set operating channel bandwidth, N and X are positive integers, and N is greater than X. The processing unit is configured to determine, based on the first frame, maximum transmit PSDs corresponding to fundamental channels in the second basic service set operating channel bandwidth.

The implementations of the eighth aspect are the communication apparatus corresponding to the implementations of the second aspect. The communication apparatus provided in the eighth aspect can perform any one of the second aspect and the possible implementations of the second aspect.

According to a ninth aspect, a communication apparatus is provided. The communication apparatus includes a communication unit and a processing unit. The communication unit is configured to receive a first frame, where the first frame includes a first element, the first element includes N pieces of first information, the N pieces of first information indicate respectively maximum transmit power spectral densities PSDs corresponding to N fundamental channels, first X fundamental channels in the N fundamental channels correspond to fundamental channels in a first basic service set operating channel bandwidth, and an (X+1)^{th} fundamental channel to an N^{th} fundamental channel in the N fundamental channels are fundamental channels in an indicated bandwidth excluding the X fundamental channels, where the indicated bandwidth is related to a value of N and a second basic service set operating channel bandwidth, the second basic service set operating channel bandwidth is different from the first basic service set operating channel bandwidth, N and X are positive integers, and N is greater than X. The processing unit is configured to determine, based on the first frame, maximum transmit PSDs corresponding to fundamental channels in the first basic service set operating channel bandwidth.

The implementations of the ninth aspect are the communication apparatus corresponding to the implementations of the third aspect. The communication apparatus provided in the ninth aspect can perform any one of the third aspect and the possible implementations of the third aspect.

According to a tenth aspect, a communication apparatus is provided. The communication apparatus includes a processing unit and a communication unit. The processing unit is configured to generate a first frame, where the first frame includes a first element, the first element includes P pieces of first information and Q pieces of second information, the P pieces of first information indicate respectively maximum transmit power spectral densities PSDs corresponding to P fundamental channels, the P fundamental channels are some or all of fundamental channels in a first basic service set operating channel bandwidth, the Q pieces of second information indicate respectively maximum transmit PSDs corresponding to fundamental channels in an indicated bandwidth excluding the P fundamental channels, and P and Q are positive integers; the first element further includes third information and fourth information, the third information indicates a value of P, and the fourth information indicates a value of Q; and the indicated bandwidth is related to a value of M and a second basic service set operating channel bandwidth, the second basic service set operating channel bandwidth is different from the first basic service set operating channel bandwidth, M is equal to a sum of P and Q, and M is a positive integer. The communication unit is configured to send the first frame.

The implementations of the tenth aspect are the communication apparatus corresponding to the implementations of the fourth aspect. The communication apparatus provided in the tenth aspect can perform any one of the fourth aspect and the possible implementations of the fourth aspect.

According to an eleventh aspect, a communication apparatus is provided. The communication apparatus includes a communication unit and a processing unit. The communication unit receives a first frame, where he first frame includes a first element, the first element includes P pieces of first information and Q pieces of second information, the P pieces of first information indicate respectively maximum transmit power spectral densities PSDs corresponding to P fundamental channels, the P fundamental channels are some or all of fundamental channels in a first basic service set operating channel bandwidth, the Q pieces of second information indicate respectively maximum transmit PSDs corresponding to fundamental channels in an indicated bandwidth excluding the P fundamental channels, and P and Q are positive integers; the first element further includes third information and fourth information, the third information indicates a value of P, and the fourth information indicates a value of Q; and the indicated bandwidth is related to a value of M and a second basic service set operating channel bandwidth, the second basic service set operating channel bandwidth is different from the first basic service set operating channel bandwidth, M is equal to a sum of P and Q, and M is a positive integer. The processing unit is configured to determine, based on the first frame, maximum transmit PSDs corresponding to fundamental channels in the second basic service set operating channel bandwidth.

The implementations of the eleventh aspect are the communication apparatus corresponding to the implementations of the fifth aspect. The communication apparatus provided in the eleventh aspect can perform any one of the fifth aspect and the possible implementations of the fifth aspect.

According to a twelfth aspect, a communication apparatus is provided. The communication apparatus includes a communication unit and a processing unit. The communication unit receives a first frame, where he first frame includes a first element, the first element includes P pieces of first information and Q pieces of second information, the P pieces of first information indicate respectively maximum transmit power spectral densities PSDs corresponding to P fundamental channels, the P fundamental channels are some or all of fundamental channels in a first basic service set operating channel bandwidth, the Q pieces of second information indicate respectively maximum transmit PSDs corresponding to fundamental channels in an indicated bandwidth excluding the P fundamental channels, and P and Q are positive integers; the first element further includes third information and fourth information, the third information indicates a value of P, and the fourth information indicates a value of Q; and the indicated bandwidth is related to a value of M and a second basic service set operating channel bandwidth, the second basic service set operating channel bandwidth is different from the first basic service set operating channel bandwidth, M is equal to a sum of P and Q, and M is a positive integer. The processing unit is configured to determine, based on the first frame, maximum transmit PSDs corresponding to fundamental channels in the first basic service set operating channel bandwidth.

The implementations of the twelfth aspect are the communication apparatus corresponding to the implementations of the sixth aspect. The communication apparatus provided in the twelfth aspect can perform any one of the sixth aspect and the possible implementations of the sixth aspect.

According to a thirteenth aspect, a communication apparatus is provided. The communication apparatus is configured to perform the method provided in the first aspect or the fourth aspect. Specifically, the apparatus may include a module configured to perform any one of the first aspect and the possible implementations of the first aspect or any one of the fourth aspect and the possible implementations of the fourth aspect.

According to a fourteenth aspect, a communication apparatus is provided. The apparatus is configured to perform the method provided in the second aspect or the fifth aspect. Specifically, the apparatus may include a module configured to perform any one of the second aspect and the possible implementations of the second aspect or any one of the fifth aspect and the possible implementations of the fifth aspect.

According to a fifteenth aspect, a communication apparatus is provided. The apparatus is configured to indicate the method provided in the third aspect or the sixth aspect. Specifically, the apparatus may include a module configured to perform any one of the third aspect and the possible implementations of the third aspect or any one of the sixth aspect and the possible implementations of the sixth aspect.

According to a sixteenth aspect, a communication apparatus is provided, including a processor. The processor is coupled to the memory, and may be configured to execute instructions in the memory, to implement the method in any one of the first aspect and the possible implementations of the first aspect, or implement the method in any one of the fourth aspect and the possible implementations of the fourth aspect. Optionally, the apparatus further includes the memory. Optionally, the apparatus further includes a communication interface, and the processor is coupled to the communication interface.

In an implementation, the apparatus is a transmit end device. When the apparatus is the transmit end device, the communication interface may be a transceiver or an input/output interface.

In another implementation, the apparatus is a chip configured in a transmit end device. When the apparatus is a chip configured in the transmit end device, the communication interface may be a transceiver or an input/output interface.

In still another implementation, the apparatus is a chip or a chip system.

Optionally, the transceiver may be a transceiver circuit. Optionally, the input/output interface may be an input/output circuit.

According to a seventeenth aspect, a communication apparatus is provided, including a processor. The processor may be configured to execute instructions in the memory, to implement the method in any one of the second aspect and the possible implementations of the second aspect, or implement the method in any one of the fifth aspect and the possible implementations of the fifth aspect. Optionally, the apparatus further includes the memory. Optionally, the apparatus further includes a communication interface, and the processor is coupled to the communication interface.

In an implementation, the apparatus is a receive end device. When the apparatus is the receive end device, the communication interface may be a transceiver or an input/output interface.

In another implementation, the apparatus is a chip configured in a receive end device. When the apparatus is a chip configured in the receive end device, the communication interface may be an input/output interface.

In still another implementation, the apparatus is a chip or a chip system.

Optionally, the transceiver may be a transceiver circuit. Optionally, the input/output interface may be an input/output circuit.

According to an eighteenth aspect, a communication apparatus is provided, including a processor. The processor may be configured to execute instructions in the memory, to implement the method in any one of the third aspect and the possible implementations of the third aspect, or implement the method in any one of the sixth aspect and the possible implementations of the sixth aspect. Optionally, the apparatus further includes the memory. Optionally, the apparatus further includes a communication interface, and the processor is coupled to the communication interface.

In an implementation, the apparatus is a receive end device. When the apparatus is the receive end device, the communication interface may be a transceiver or an input/output interface.

In another implementation, the apparatus is a chip configured in a receive end device. When the apparatus is a chip configured in the receive end device, the communication interface may be an input/output interface.

In still another implementation, the apparatus is a chip or a chip system.

Optionally, the transceiver may be a transceiver circuit. Optionally, the input/output interface may be an input/output circuit.

According to a nineteenth aspect, a computer-readable storage medium is provided. The computer-readable storage medium stores computer instructions, and when the computer instructions are executed by an apparatus, the apparatus is enabled to implement the method in any one of the first aspect to the sixth aspect and any one of the possible implementations of the first aspect to the sixth aspect.

According to a twentieth aspect, a computer program product including instructions is provided. The computer program product includes a computer program, and when the computer program is executed by an apparatus, the apparatus is enabled to implement the method provided in any one of the first aspect to the sixth aspect and any one of the possible implementations of the first aspect to the sixth aspect.

According to a twenty-first aspect, a communication system is provided, including the transmit end device, the first receive end device, and the second receive end device described above.

Optionally, the first receive end device is a non-EHT station, and the second receive end device is an EHT station.

### BRIEF DESCRIPTION OF DRAWINGS

FIG. 1 is a diagram of an application scenario to which an embodiment of this application is applicable;
FIG. 2 is a schematic flowchart of a power indication method according to an embodiment of this application;
FIG. 3 is a diagram of a structure of a first element according to an embodiment of this application;
FIG. 4 is a diagram of an indicated bandwidth according to an embodiment of this application;
FIG. 5 is a diagram of a structure of a second element according to an embodiment of this application;
FIG. 6 is a schematic flowchart of another power indication method according to an embodiment of this application;
FIG. 7 is a diagram of another indicated bandwidth according to an embodiment of this application; and
FIG. 8 to FIG. 10 are diagrams of a structure of a possible communication apparatus according to an embodiment of this application.

### DESCRIPTION OF EMBODIMENTS

The following describes technical solutions of this application with reference to accompanying drawings.

The technical solutions provided in embodiments of this application are applicable to a wireless local area network (wireless local area network, WLAN) scenario. For example, IEEE 802.11-related standards such as the 802.11a/b/g standard, the 802.11n standard, the 802.11ac standard, the 802.11ax standard, a next-generation Wi-Fi protocol of IEEE 802.11ax, for example, 802.11be, Wi-Fi 7, extremely high throughput (extremely high throughput, EHT), 802.11ad, 802.11ay, or 802.11bf, a next generation protocol of 802.11be, for example, Wi-Fi 8 are supported. The technical solutions provided in embodiments of this application may be further applied to an ultra wide band (ultra wide band, UWB)-based wireless personal area network system, for example, the 802.15 series standards, or may be further applied to a sensing (sensing) system, for example, the 802.11bf series standards. The 802.11n standard is referred to as a high throughput (high throughput, HT), the 802.11ac standard is referred to as a very high throughput (very high throughput, VHT), the 802.11ax standard is referred to as high efficiency (high efficient, HE), and the 802.11be standard is referred to as an extremely high throughput (extremely high throughput, EHT). 802.11bf includes two major categories of standards: a low frequency (Sub-7 GHz) and a high frequency (60 GHz). Sub-7 GHz is implemented mainly based on standards such as 802.11ac, 802.11ax, 802.11be, and a next-generation standard of 802.11be. 60 GHz is implemented mainly based on standards such as 802.11ad, 802.11ay, and a next-generation standard of 802.11ay. 802.11ad may also be referred to as a directional multi-gigabit (directional multi-gigabit, DMG) standard, and 802.11ay may also be referred to as an enhanced directional multi-gigabit (enhanced directional multi-gigabit, EDMG) standard.

Although embodiments of this application are mainly described by using an example in which a WLAN network is deployed, especially a network to which the IEEE 802.11 system standards are applied, a person skilled in the art easily understands that various aspects in embodiments of this application may be extended to other networks that use various standards or protocols, for example, a high performance radio local area network (high performance radio local area network, HIPERLAN), a wireless wide area network (wireless wide area network, WWAN), a wireless personal area network (wireless personal area network, WPAN), or other networks that are known or developed in the future. Therefore, regardless of a used coverage area and a used wireless access protocol, the various aspects provided in embodiments of this application are applicable to any suitable wireless network.

The technical solutions in embodiments of this application may be further applied to various communication systems, for example, a WLAN communication system, a wireless fidelity (wireless fidelity, Wi-Fi) system, a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a fifth generation (5th generation, 5G) system or new radio (new radio, NR), a future sixth generation (6th generation, 6G) system, the internet of things (internet of things, IoT) network, or the vehicle-to-everything (vehicle to x, V2X).

The communication system to which this application is applicable is merely an example for description, and the communication system to which this application is applicable is not limited thereto. This is collectively described herein. Details are not described below again.

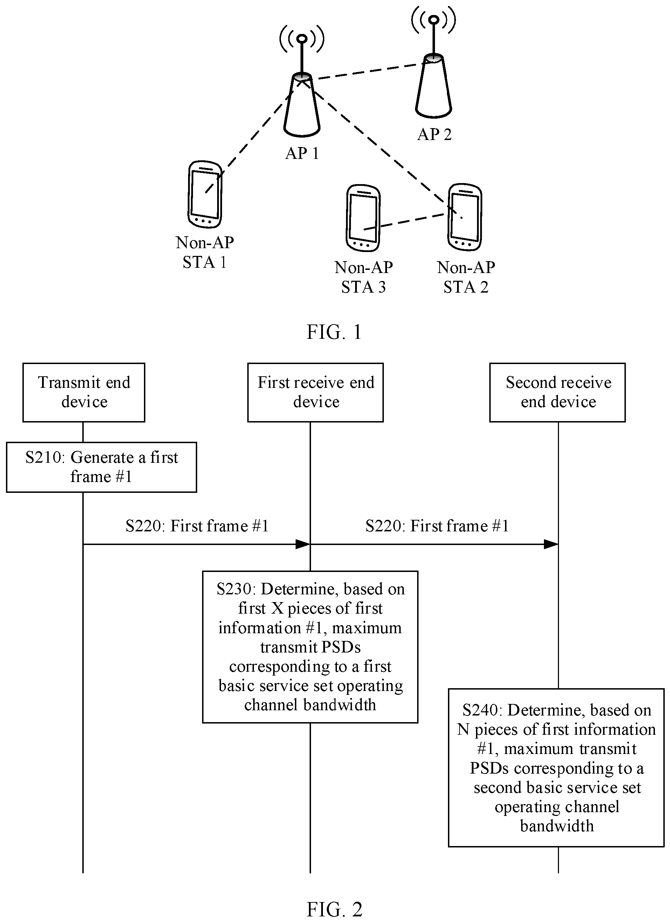

FIG. 1 is a diagram of an application scenario to which an embodiment of this application is applicable. As shown in FIG. 1, a resource configuration method provided in this application is applicable to data communication between stations (stations, STAs). The station may be an access point (access point, AP) station, or may be a non-access point station (none access point station, non-AP STA). The access point station and the non-access point station are briefly referred to as an AP and a non-AP station, respectively. Specifically, the solutions in this application are applicable to data communication between an AP and one or more non-AP stations (for example, data communication between an AP 1 and a non-AP STA 1 and a non-AP STA 2), and are also applicable to data communication between APs (for example, data communication between the AP 1 and an AP 2) and data communication between non-AP STAs (for example, data communication between the non-AP STA 2 and a non-AP STA 3).

The access point may be an access point used by a terminal (for example, a mobile phone) to access a wired (or wireless) network, and is mainly deployed at home, in a building, and in a campus. A typical coverage radius is tens of meters or more than 100 meters. Certainly, the access point may be alternatively deployed outdoors. The access point is equivalent to a bridge that connects the wired network and a wireless network. A main function of the access point is to connect various wireless network clients together and then connect the wireless network to the Ethernet.

Specifically, the access point may be a terminal or a network device with a Wi-Fi chip. The network device may be a server, a router, a switch, a bridge, a computer, a mobile phone, a relay station, a vehicle-mounted device, a wearable device, a network device in a 5G network, a network device in a future 6G network, a network device in a public land mobile network (public land mobile network, PLMN), or the like. This is not limited in embodiments of this application. The access point may be a device that supports a Wi-Fi standard. For example, the access point may alternatively support one or more standards of the institute of electrical and electronics engineers (Institute of Electrical and Electronics Engineers, IEEE) 802.11 family, such as 802.11a, 802.11b, 802.11g, 802.11n, 802.11ac, 802.11ax, 802.11be, 802.11ad, and 802.11ay.

The non-AP station may be a wireless communication chip, a wireless sensor, a wireless communication terminal, or the like, and may also be referred to as a user, user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The non-AP station may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, an internet of things device, a wearable device, a terminal device in the 5G network, a terminal device in the future 6G network, a terminal device in the PLMN, or the like. This is not limited in embodiments of this application. The non-AP station may be a device that supports a WLAN standard. For example, the non-AP station may support one or more standards of the IEEE 802.11 family, such as 802.11a, 802.11b, 802.11g, 802.11n, 802.11ac, 802.11ax, 802.11be, 802.11ad, and 802.11ay.

For example, the non-AP station may be a mobile phone, a tablet computer, a set-top box, a smart television, a smart wearable device, a vehicle-mounted communication device, a computer, an internet of things (internet of things, IoT) node, a sensor, a smart camera, a smart remote control, or a smart water/electricity meter in a smart home, and a sensor in a smart city.

The AP or the non-AP station may include a transmitter, a receiver, a memory, a processor, and the like. The transmitter and the receiver are respectively configured to send and receive packet structures. The memory is configured to store signaling information, store a preset value agreed in advance, and the like. The processor is configured to parse the signaling information, process related data, and the like.

The communication system to which this application is applicable is merely an example for description, and the communication system to which this application is applicable is not limited thereto. This is collectively described herein. Details are not described below again.

For ease of understanding of embodiments of this application, the following first describes several nouns or terms in this application.

### 1. Basic service set (basic service set, BSS)

The BSS is used to describe a group of devices that can communicate with each other in a WLAN. The WLAN may include a plurality of BSSs. One BSS may include a plurality of stations (station, STA). The station may be an AP or a non-AP STA. Optionally, one BSS may include one AP and a plurality of non-AP STAs associated with the AP.

### 2. Fundamental channel

The fundamental channel may be a channel with a 20 megahertz (MHz) bandwidth in a current standard. One BSS operating channel bandwidth may be formed by one or more 20 MHz fundamental channels. For example, one BSS operating channel whose channel bandwidth is 160 MHz may include eight consecutive fundamental channels.

In a current protocol, a plurality of fundamental channels in one BSS operating channel bandwidth may be used to jointly transmit data, to implement a larger channel bandwidth. For example, one BSS operating channel bandwidth includes a primary 20 MHz channel (Primary 20 MHz, P20), a secondary 20 MHz channel (Secondary 20 MHz, S20), a secondary 40 MHz channel (Secondary 40 MHz, S40), a secondary 80 MHz channel (Secondary 80 MHz, S80), or a secondary 160 MHz (Secondary 160 MHz, S160) channel. The primary 20 MHz channel and the secondary 20 MHz channel may form a primary 40 MHz channel, the primary 20 MHz channel, the secondary 20 MHz channel, and the secondary 40 MHz channel may form a primary 80 MHz channel, and the primary 20 MHz channel, the secondary 20 MHz channel, the secondary 40 MHz channel, and the secondary 80 MHz channel may form a primary 160 MHz channel.

In the current protocol, to avoid interference to another station operating on a 5 GHz or 6 GHz frequency band, one BSS operating channel bandwidth may support static puncturing, that is, one or more fundamental channels in the BSS operating channel are punctured channels, and data is transmitted on a channel in the BSS operating channel excluding the punctured channels. For example, in the eight consecutive fundamental channels included in the BSS operating channel whose channel bandwidth is 160 MHz, six fundamental channels are used for data transmission, and two fundamental channels are punctured channels.

### 3. EHT station and non-EHT station

The EHT station may be a non-AP STA that supports an EHT protocol. The EHT station supports an ultra-large bandwidth, for example, a 320 MHz bandwidth. The ultra-large bandwidth supported by the ETH device may be referred to as an ETH BSS operating channel bandwidth, an ETH BSS channel bandwidth, or the like. The EHT station may alternatively support bandwidth discontinuousness, that is, the ETH BSS operating channel bandwidth may support static puncturing.

The non-EHT station may be a non-AP STA that does not support the EHT protocol, or may be a station that cannot identify an ultra-large bandwidth and/or cannot identify discontinuous channel bandwidths, for example, a high throughput (high throughput, HT) station. In other words, based on processing logic of the non-EHT station, the non-EHT station cannot correctly interpret information about the EHT BSS operating channel bandwidth.

It should be noted that one BSS may include stations of a same type, or may include stations of different types. For example, one BSS may include both the ETH station and the non-ETH station. Different stations may support different BSS operating channel bandwidths. For example, the ETH station may support a 20 MHz, 40 MHz, 80 MHz, 160 MHz, or 320 MHz bandwidth, and the non-ETH station may support a 20 MHz, 40 MHz, 80 MHz, or 160 MHz bandwidth. For ease of description, in this embodiment of this application, after the ETH AP establishes a BSS, a BSS operating channel bandwidth claimed to the EHT station is referred to as the ETH BSS operating channel bandwidth, and a BSS operating channel bandwidth claimed to the non-EHT station is referred to as the non-ETH BSS operating channel bandwidth.

### 4. Equivalent isotropic radiated power (equivalent isotropic radiated power, EIRP) and power spectral density (power spectral density, PSD)

The EIRP may be a product of a power provided by a wireless transmit end device to an antenna and an absolute gain of the antenna in a given direction. The PSD may indicate a correspondence between a frequency and a transmit power. For example, a power of each unit frequency wave may be obtained after the power spectral density is multiplied by a proper coefficient. When stations in a BSS communicate with each other, an AP may notify all non-AP STAs of transmit power limits, that is, maximum transmit EIRPs or PSDs, applicable to a BSS operating channel bandwidth, so that each non-AP STA can learn of a transmit power limit of its own BSS operating channel bandwidth.

In a current protocol, the AP notifies, by broadcasting a transmit power envelope element, the non-AP STA of the transmit power limit applicable to the BSS operating channel bandwidth. However, a current transmit power envelope element is designed based on a non-ETH station, and cannot indicate a transmit power limit of an ETH BSS operating channel bandwidth.

This application provides a power indication method and a communication apparatus. Maximum transmit PSDs corresponding to two types of BSS operating channel bandwidths are indicated in one element, so that transmission overheads can be reduced when the maximum transmit PSDs corresponding to the two types of BSS operating channel bandwidths are reliably indicated. The following first describes the power indication method with reference to FIG. 2 to FIG. 7.

FIG. 2 is a schematic flowchart of a power indication method according to an embodiment of this application,
S210: A transmit end device generates a first frame #1.

The transmit end device may be the AP shown in FIG. 1. Optionally, the transmit end device may be alternatively an EHT AP that supports an EHT protocol. The EHT AP is capable of sending the first frame #1 to a plurality of different types of receive end devices. The receive end devices may include an EHT station and a non-EHT station. For more detailed descriptions of the transmit end device and the receive end device, refer to the foregoing descriptions. Details are not described herein again.

The first frame #1 includes a first element #1, the first element #1 includes N pieces of first information #1, the N pieces of first information #1 indicate respectively maximum transmit power spectral densities PSDs corresponding to N fundamental channels, first X fundamental channels in the N fundamental channels correspond to fundamental channels in a first basic service set operating channel bandwidth, and an (X+1)^{th} fundamental channel to an N^{th} fundamental channel in the N fundamental channels are fundamental channels in an indicated bandwidth excluding the X fundamental channels, where the indicated bandwidth is related to a value of N and a second basic service set operating channel bandwidth, the second basic service set operating channel bandwidth is different from the first basic service set operating channel bandwidth, N and X are positive integers, and N is greater than X. Therefore, the first frame #1 may indicate both maximum transmit PSDs corresponding to the fundamental channels in the first basic service set operating channel bandwidth and maximum transmit PSDs corresponding to fundamental channels in the second basic service set operating channel bandwidth. The following separately describes in detail the first basic service set operating channel bandwidth, the second service set operating channel bandwidth, the first frame #1, the first element #1, the first information #1, and the indicated bandwidth.

That the first basic service set operating channel bandwidth (which is the first BSS operating channel bandwidth for short) is different from the second basic service set operating channel bandwidth (which is the second BSS operating channel bandwidth) may be as follows: A size of the first BSS operating channel bandwidth is different from a size of the second BSS operating channel bandwidth, or a number of the fundamental channels in the first BSS operating channel bandwidth is different from a number of the fundamental channels in the second BSS operating channel bandwidth. For example, the first BSS operating channel bandwidth is a 40 MHz bandwidth including two fundamental channels, and the second BSS operating channel bandwidth is a 320 MHz bandwidth including 16 fundamental channels.

Optionally, the fundamental channels in the second BSS operating channel bandwidth include the fundamental channels in the first BSS operating channel bandwidth. Optionally, a bandwidth size of the fundamental channel is 20 MHz. Alternatively, the first BSS operating channel bandwidth is included in the second BSS operating channel bandwidth.

For example, a size of the second BSS operating channel bandwidth is 320 MHz, and the first BSS operating channel bandwidth is a part of the 320 MHz bandwidth, for example, 80 MHz. In other words, if the second BSS operating channel bandwidth includes 16 fundamental channels 1 to 16, the first BSS operating channel bandwidth includes some of the 16 fundamental channels. For example, the fundamental channels 7 to 10 form one first BSS operating channel bandwidth of 80 MHz.

Optionally, the first BSS operating channel bandwidth is a non-EHT operating channel bandwidth, and the second BSS operating channel bandwidth is an EHT operating channel bandwidth. For descriptions of the non-EHT operating channel bandwidth and the EHT operating channel bandwidth, refer to the foregoing descriptions. It should be noted that, the first BSS operating channel bandwidth and the second BSS operating channel bandwidth may be alternatively channel bandwidths that are defined in the future and have corresponding features. This is not particularly limited in this application. For ease of understanding of this embodiment of this application, the following provides descriptions by using an example in which the first BSS operating channel bandwidth is the non-EHT operating channel bandwidth and the second BSS operating channel bandwidth is the EHT operating channel bandwidth. The following descriptions of the non-EHT operating channel bandwidth may be applied to the first BSS operating channel bandwidth, and the following descriptions of the EHT operating channel bandwidth may be applied to the second BSS operating channel bandwidth.

Optionally, the transmit end device broadcasts information indicating that the EHT BSS operating channel bandwidth is different from the non-EHT BSS operating channel bandwidth, so that the receive end device may learn, based on the information, that the EHT BSS operating channel bandwidth is different from the non-EHT BSS operating channel bandwidth, and needs to interpret the N pieces of first information #1 in different manners. Alternatively, the receive end device may consider by default that the EHT BSS operating channel bandwidth is different from the non-EHT BSS operating channel bandwidth. This is not particularly limited in this application.

The first frame #1 may be a management frame generated when the transmit end device establishes a BSS, for example, a beacon (beacon) frame or a probe response frame. The transmit end device may establish a communication relationship with a plurality of receive end devices by broadcasting the first frame #1. The plurality of receive end devices may include the EHT station and the non-EHT station.

The first frame #1 may include the first element #1, and the first element #1 may indicate a transmit power envelope corresponding to the fundamental channel in the BSS operating channel bandwidth. For example, the first element #1 may be a transmit power envelope element (transmit power envelope element). It may be understood that the first element #1 may be alternatively another element that is defined in the future and that is used to implement a corresponding function. For ease of understanding of this embodiment of this application, the following provides descriptions by using an example in which the first element #1 is the transmit power envelope element.

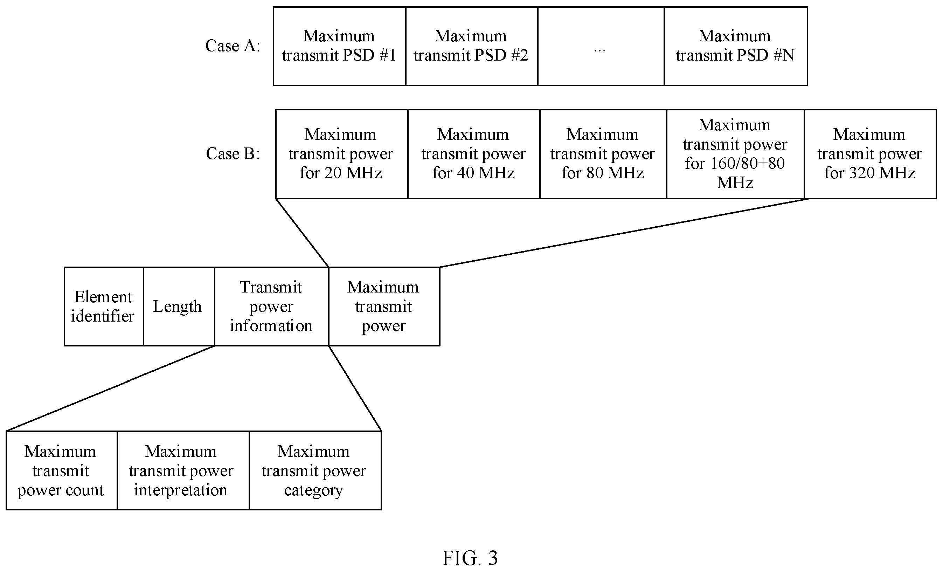

For ease of understanding of this embodiment of this application, the following describes an example of the transmit power envelope element with reference to FIG. 3. Refer to FIG. 3. The transmit power envelope element may include the following four fields: a 1^{st} field being an element identifier (element identifier) field, a 2^{nd} field being a length (length) field, a 3^{rd} field being a transmit power information (transmit power information) field, and a 4^{th} field being a maximum transmit power (maximum transmit power) field. The element identifier field identifies the transmit power envelope element, and the length field indicates a total length of other fields that are after the length field and that are in the transmit power envelope element. The transmit power information field and the maximum transmit power field indicate maximum transmit power information corresponding to at least one fundamental channel, for example, a maximum transmit PSD or EIRP.

It should be noted that the transmit power envelope element and sizes of the fields included in the transmit power envelope element are not particularly limited in this application. For example, the element identifier field occupies one octet, the length field occupies one octet, the transmit power information field occupies one octet, and octets occupied by the maximum transmit power is related to a number of pieces of the first information #1.

Specifically, for the transmit power information field, the field may include the following three subfields: a maximum transmit power count (maximum transmit power count) subfield, a maximum transmit power interpretation (maximum transmit power interpretation) subfield, and a maximum transmit power category (maximum transmit power category) subfield. The maximum transmit power interpretation subfield and the maximum transmit power category subfield indicate maximum transmit power information corresponding to at least one fundamental channel, and the maximum transmit power category subfield indicates a category to which a maximum transmit power is applied. For example, the subfield indicates that a maximum transmit power indicated by the element is applied to a default category. When the maximum transmit power interpretation subfield has a different meaning, the maximum transmit power count subfield also has a different meaning. The following describes this in detail.

It should be noted that a size of the transmit power information field and sizes of the subfields included in the transmit power information field are not particularly limited in this application. For example, when the transmit power information field occupies one octet, the maximum transmit power count subfield may occupy three bits, the maximum transmit power interpretation subfield occupies three bits, and the maximum transmit power category subfield occupies two bits.

Different values of the maximum transmit power interpretation subfield correspond to different interpretations. For example, Table 1 shows an interpretation manner of the maximum transmit power interpretation subfield.

**Table 1**

| Value | Interpretation of the maximum transmit power interpretation subfield |
|---|---|
| 0 | Local EIRP (local EIRP) |
| 1 | Local EIRP PSD (local EIRP PSD) |
| 2 | Regulatory client EIRP (regulatory client EIRP) |
| 3 | Regulatory client EIRP PSD (regulatory client EIRP PSD) |
| 4 to 7 | Reserved (reserved) |

When the value of the maximum transmit power interpretation subfield is 0 or 2 (case A), the maximum transmit power count subfield is used to describe the local EIRP or the regulatory client EIRP. When the value of the maximum transmit power interpretation subfield is 1 or 3 (case B), the maximum transmit power interpretation subfield is used to describe the local EIRP PSD or the regulatory client EIRP PSD (or PSD for short). In other words, when the maximum transmit power interpretation subfield has a different value, the maximum transmit power count subfield also has a different meaning. The following describes this in detail.

It may be understood that when the first element #1 is the transmit power envelope element, and a maximum transmit power information field indicates the PSD, the N pieces of first information #1 are respectively carried in N subfields in the maximum transmit power information field. In this embodiment of this application, descriptions of the subfields in the maximum transmit power information field may be applied to the descriptions of the first information #1. For example, descriptions of first X subfields in the N subfields may be applied to descriptions of first X pieces of first information #1 in the N pieces of first information #1, and descriptions of an (X+1)^{th} subfield to an N^{th} subfield in the N subfields may be applied to descriptions of an (X+1)^{th} piece of first information #1 to an N^{th} piece of first information #1 in the N pieces of first information #1. Optionally, each subfield in the maximum transmit power field occupies one octet.

Optionally, the first X pieces of first information #1 in the N pieces of first information #1 are sorted sequentially in ascending order of frequencies of the corresponding fundamental channels. Optionally, the (X+1)^{th} piece of first information #1 to the N^{th} piece of first information #1 in the N pieces of first information #1 are sorted sequentially in ascending order of frequencies of the corresponding fundamental channels. Therefore, the receive end can determine, based on positions of the pieces of first information #1, the maximum transmit PSDs corresponding to the fundamental channels, and no additional bit is required to indicate a specific correspondence between the fundamental channels and the pieces of first information #1, thereby further reducing transmission overheads.

Case A: When the maximum transmit power interpretation subfield is set to 1 or 3, the maximum transmit power count subfield indicates a number of subfields (maximum transmit PSD subfields) included in the maximum transmit power field. In other words, different values of the maximum transmit power count subfield indicate the value of N. Optionally, the value of N is 0 or 2 to the power of n, and n is an integer greater than or equal to 0. For example, Table 2 shows an interpretation manner of the maximum transmit power count subfield corresponding to a case in which the maximum transmit power interpretation subfield is set to 1 or 3.

**Table 2**

| Value | Number *N* of subfields in the maximum transmit power field |
|---|---|
| 0 | 0 |
| 1 | 1 |
| 2 | 2 |
| 3 | 4 |
| 4 | 8 |
| 5 to 7 | Reserved or a value greater than 8 |

In other words, when the value of the maximum transmit power count subfield is not 0, the number of subfields included in the maximum transmit power field is represented by N. When the value of the maximum transmit power count subfield is 0, that is, N is 0, it indicates that the maximum transmit power field includes one subfield, and the subfield indicates a maximum transmit PSD of any bandwidth in the BSS operating channel bandwidth. When the number N of subfields in the maximum transmit power field is greater than or equal to 1, each subfield in the maximum transmit power field is used to describe a maximum transmit PSD of one fundamental channel.

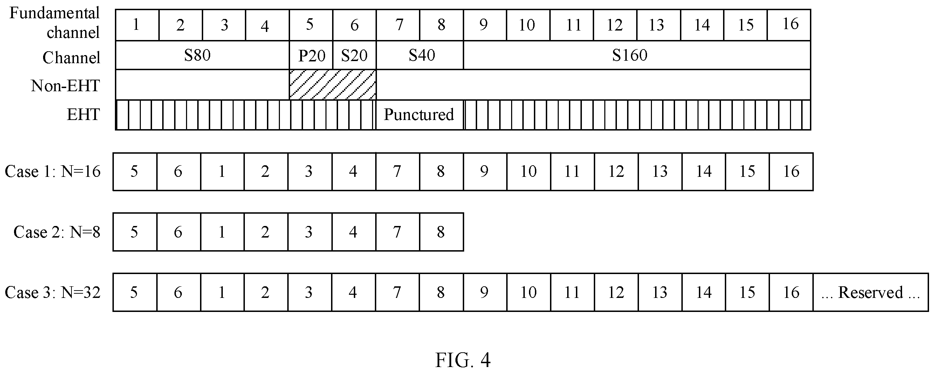

The foregoing describes the first frame #1 and the first element #1. The indicated bandwidth is related to the value of N and the second BSS operating channel bandwidth. The following describes the indicated bandwidth in different cases with reference to FIG. 4.

### Case 1:

When N is equal to a first value, the indicated bandwidth is the second BBS operating channel bandwidth. In other words, the indicated bandwidth may be the EHT BSS operating channel bandwidth.

The first value is a number of fundamental channels in the EHT BBS operating channel bandwidth. For example, if EHT BSS operating channel bandwidths are 20 MHz, 40 MHz, 80 MHz, 160 MHz, and 320 MHz, first values are 1, 2, 4, 8, and 16 respectively.

In other words, when the number of subfields is equal to the number of fundamental channels in the EHT BBS operating channel bandwidth, each subfield in the (X+1)^{th} to the N^{th} subfields in the maximum transmit power field may indicate maximum transmit PSDs corresponding to fundamental channels excluding the non-EHT BSS operating channel bandwidth.

For example, refer to FIG. 4. The EHT BSS operating channel bandwidth is 320 MHz, including 16 (that is, the first value is equal to 16) fundamental channels, which are numbered from 1 to 16 in ascending order of frequencies. The fundamental channels 7 and 8 are punctured channels. The fundamental channels 1 to 4 form a secondary 80 MHz channel, the channel bandwidths 5 and 6 form a primary 40 MHz channel, and the fundamental channels 9 to 16 form a secondary 160 MH channel. The non-EHT BSS operating channel bandwidth is 40 MHz. Two fundamental channels, that are the fundamental channels 5 and 6, are included.

When N is equal to the first value 16, the maximum transmit power field includes 16 subfields, and first two subfields indicate respectively maximum transmit PSDs corresponding to fundamental channels (that is, the fundamental channels 5 and 6) included in a non-EHT BSS operating channel. A 3^{rd} subfield to a 16^{th} subfield indicate respectively maximum transmit PSDs corresponding to fundamental channels in the EHT BSS operating channel bandwidth excluding the fundamental channels included in the non-EHT BSS operating channel. In other words, the 3^{rd} subfield to 16^{th} subfield indicate respectively maximum transmit PSDs corresponding to the fundamental channels 1 to 4 and 7 to 16. It may be understood that the fundamental channels 7 and 8 are punctured channels. Therefore, meanings of a 7^{th} subfield and an 8^{th} subfield in the 16 subfields may be reserved, or may be set to minimum values -128. In this case, it indicates that the 20 MHz channel cannot be used for transmission. Details are not described below.

### Case 2:

When N is less than a first value, the indicated bandwidth is primary (N*fundamental channel bandwidth) MHz in the EHT BBS operating channel bandwidth.

For a 40 MHz, 80 MHz, 160 MHz, or 320 MHz BSS operating channel bandwidth, if N is greater than 0 and is less than 2, 4, 8, or 16 respectively, when N is equal to 1, 2, 4, or 8 respectively, the indicated bandwidth is primary 20 MHz, primary 40 MHz, primary 80 MHz, or primary 160 MHz respectively.

In other words, when the number of subfields is less than a number of fundamental channels in the EHT BBS operating channel, each subfield in the (X+1)^{th} to the N^{th} subfields in the maximum transmit power field may indicate PSDs corresponding to fundamental channels in the indicated bandwidth excluding the fundamental channels included in the non-EHT BSS operating channel.

For example, still refer to FIG. 4. In the case 2, when N is less than the first value 16, N may be equal to 8. In this case, the indicated bandwidth is primary 160 MHz, the maximum transmit power field includes eight subfields, and first two subfields in the eight subfields indicate respectively maximum transmit PSDs corresponding to fundamental channels (that is, fundamental channels 5 and 6) in the non-EHT BSS operating channel bandwidth. A 3^{rd} subfield to an 8^{th} subfield indicate respectively maximum transmit PSDs corresponding to fundamental channels in the EHT BSS operating channel bandwidth excluding the fundamental channels included in the non-EHT BSS operating channel, that is, maximum transmit PSDs corresponding to fundamental channels 1 to 4 and 7 and 8.

It should be noted that, because some fundamental channels may have no maximum transmit PSD limits or the maximum transmit PSD limits of the fundamental channels have been sent previously (which remains unchanged in this case), in this embodiment of this application, there may be no need to additionally design a subfield to indicate maximum transmit PSDs corresponding to the fundamental channels, that is, there is no maximum transmit power subfield corresponding to a fundamental channel that is not included in the indicated bandwidth but in the EHT BBS operating channel bandwidth. Therefore, transmission overheads can be reduced by reducing redundant subfields.

### Case 3:

When N is greater than a first value, the indicated bandwidth is a bandwidth greater than the EHT BBS operating channel bandwidth, that is, the number of subfields in the maximum transmit power field is greater than a number of fundamental channels included in an EHT BBS operating channel. First Y subfields in the N subfields indicate respectively maximum transmit PSDs corresponding to Y fundamental channels included in the EHT BBS operating channel, Y is a positive integer, and Y is greater than X, that is, the first Y subfields include the foregoing first X subfields. In other words, in this embodiment of this application, the first X subfields (that is, first X pieces of first information in the N pieces of first information) in the N subfields may have two functions of indicating maximum transmit PSDs corresponding to fundamental channels in the non-EHT BSS operating channel bandwidth and indicating the maximum transmit PSDs corresponding to the fundamental channels in the EHT BSS operating channel bandwidth. Therefore, there is no need to repeatedly design the X subfields to indicate respectively the maximum transmit PSDs corresponding to the fundamental channels in the non-EHT operating channel bandwidth and the maximum transmit PSDs corresponding to the fundamental channels in the EHT operating channel bandwidth, thereby reducing transmission overheads.

For example, still refer to FIG. 4. In the case 3, when N is greater than the first value 16, N may be equal to a value that is greater than 16 and that is 2 to the power of n, such as 32 or 64. An example in which N is equal to 32 is used. The maximum transmit power field includes 32 subfields, and first 16 subfields in the 32 subfields indicate maximum transmit PSDs corresponding to fundamental channels in the EHT BSS operating channel bandwidth. Fundamental channels 5 and 6 in the non-EHT BSS operating channel bandwidth are arranged in first two subfields, and a 3^{rd} subfield to a 16^{th} subfield indicate respectively maximum transmit PSDs corresponding to fundamental channels 1 to 4 and 7 to 16. A 17^{th} subfield to a 32^{nd} subfield are reserved.

It should be noted that N in the foregoing case 1 to case 3 is greater than X. When N is less than or equal to the number X of fundamental channels in the first BSS operating channel bandwidth, the indicated bandwidth may be related to N and X (or the first BSS operating channel bandwidth). When N is less than or equal to X, this is described in the following cases:

### Case a:

When N is equal to a second value, the indicated bandwidth is the non-EHT BSS operating channel bandwidth. The second value is the number X of fundamental channels in the first BSS operating channel bandwidth. For example, if non-EHT BSS operating channel bandwidths are 20 MHz, 40 MHz, 80 MHz, and 160 MHz, second values are 1, 2, 4, and 8 correspondingly.

### Case b:

When N is less than a second value, the indicated bandwidth is primary (N*fundamental channel bandwidth) MHz in the non-EHT BBS operating channel bandwidth. For example, for a 40 MHz, 80 MHz, or 160 MHz bandwidth, if N is greater than 0 and is less than 2, 4, or 8 respectively, when N is equal to 1, 2, or 4 respectively, the indicated bandwidth is primary 20 MHz, primary 40 MHz, or primary 80 MHz respectively.

The foregoing describes the indicated bandwidth, the number and an arrangement manner of subfields in the maximum transmit power field (that is, the number and an arrangement manner of pieces of first information #1). In this embodiment of this application, the N pieces of first information #1 are designed by defining the indicated bandwidth, so that the N pieces of first information #1 can simultaneously indicate the maximum transmit PSDs corresponding to the fundamental channels in the two types of BSS operating channel bandwidths. Both the EHT station and the non-EHT station can obtain, based on the N pieces of first information #1, maximum transmit PSDs corresponding to fundamental channels in their own BSS operating channel bandwidths, and may not need to additionally define a plurality of frames or elements. Therefore, transmission overheads can be reduced when the maximum transmit PSDs corresponding to the two types of BSS operating channel bandwidths are reliably indicated.

In addition, the X fundamental channels in the non-EHT BSS operating channel bandwidth are also included in the EHT BSS operating channel bandwidth.

In addition, in another manner, the transmit power envelope element is simply extended. For example, a maximum transmit PSD subfield corresponding to each 20 MHz in the EHT BSS operating channel bandwidth excluding the non-EHT BSS operating channel bandwidth is added to an end of the element, or a maximum transmit EIRP subfield corresponding to a 320 MHz bandwidth is added. Because the element has only one field indicating a number of maximum transmit PSD subfields, but the field currently indicates a number of maximum transmit PSD subfields corresponding to each of some or all 20 MHz in the non-EHT BSS bandwidth, the method cannot implement the following function: carrying a maximum transmit PSD subfield corresponding to each 20 MHz that is of the EHT BSS operating channel bandwidth and that is more than the non-EHT BSS operating channel bandwidth. The reason why it is unnecessary to carry the maximum transmit PSD subfield corresponding to each extra 20 MHz is that no additional PSD limit is required for transmitting a PPDU in some 20 MHz. Therefore, the method lacks flexibility and leads to high overheads. Compared with this manner, in this implementation, the maximum transmit PSD subfield corresponding to each extra 20 MHz may not be carried, so that overheads are low and flexibility is high.

It should be noted that, when the maximum transmit power interpretation subfield is set to 1 or 3, meanings of the maximum transmit power field are described. That the maximum transmit power interpretation subfield is set to 0 or 2, that is, the maximum transmit power field indicates an EIRP corresponding to the channel is described below.

When the maximum transmit power interpretation subfield is set to 0 or 2, different values of the maximum transmit power count subfield indicate different subfields included in the maximum transmit power field. For example, Table 2 shows an interpretation manner of the maximum transmit power count subfield corresponding to a case in which the maximum transmit power interpretation subfield is set to 0 or 2.

**Table 2**

| Value | Subfields included in a corresponding maximum transmit power field |
|---|---|
| 0 | Maximum transmit power for 20 MHz (Maximum Transmit Power For 20 MHz) |
| 1 | Maximum transmit power for 20 MHz (Maximum Transmit Power For 20 MHz) |
| | Maximum transmit power for 40 MHz (Maximum Transmit Power For 40 MHz) |
| 2 | Maximum transmit power for 20 MHz (Maximum Transmit Power For 20 MHz) |
| | Maximum transmit power for 40 MHz (Maximum Transmit Power For 40 MHz) |
| | Maximum transmit power for 80 MHz (Maximum Transmit Power For 80 MHz) |
| 3 | Maximum transmit power for 20 MHz (Maximum Transmit Power For 20 MHz) |
| | Maximum transmit power for 40 MHz (Maximum Transmit Power For 40 MHz) |
| | Maximum transmit power for 80 MHz (Maximum Transmit Power For 80 MHz) |
| | Maximum transmit power for 160/(80+80) MHz (Maximum Transmit Power For 60/(80+80) MHz) |
| | For TVHT STAs, reserved (for TVHT STAs, reserved) |
| 4 | Maximum transmit power for 20 MHz (Maximum Transmit Power For 20 MHz) |
| | Maximum transmit power for 40 MHz (Maximum Transmit Power For 40 MHz) |
| | Maximum transmit power for 80 MHz (Maximum Transmit Power For 80 MHz) |
| | Maximum transmit power for 160/(80+80) MHz (Maximum Transmit Power For 60/(80+80) MHz) |
| | Maximum transmit power for 320 MHz (Maximum Transmit Power For 320 MHz) |
| 5 to 7 | First five octets indicate respectively the maximum transmit power for 20 MHz, the maximum transmit power for 40 MHz, the maximum transmit power for 80 MHz, the maximum transmit power for 160/(80+80) MHz, and the maximum transmit power for 320 MHz. Other octets are reserved. |

In other words, the number of subfields included in the maximum transmit power field is related to content and the value of the maximum transmit power count subfield. For example, when the value of the maximum transmit power count subfield is 0, the maximum transmit power field includes one subfield, and the subfield is a maximum transmit power of a 20 MHz bandwidth. When the value of the maximum transmit power count subfield is 1, the maximum transmit power subfield includes two subfields. One of the subfields is a maximum transmit power corresponding to a 20 MHz bandwidth channel, and the other is a maximum transmit power corresponding to a 40 MHz bandwidth channel. By analogy, for example, FIG. 3 is a diagram of a structure of a maximum transmit power field corresponding to a case in which the value of the maximum transmit power count subfield is 4.

It may be understood that, the receive end device may learn of its own BSS operating channel bandwidth. For example, the first frame #1 may further include elements indicating an EHT BSS operating channel bandwidth and a non-EHT BSS operating channel bandwidth respectively. For example, a non-EHT station learns of a bandwidth size of the non-EHT BSS operating channel bandwidth based on an element indicating the non-EHT BSS operating channel bandwidth, for example, a high efficiency (high efficiency, HE) operation element, a very high throughput (very high throughput, VHT) operation element, or a high throughput (high throughput, HT) operation element, and learns of a number X of fundamental channels based on the bandwidth size, to learn that first X pieces of first information #1 in the N pieces of first information #1 indicate maximum transmit PSDs corresponding to fundamental channels in the non-EHT BSS operating channel bandwidth. For another example, an EHT station learns of a bandwidth size of the EHT BSS operating channel bandwidth based on an element indicating the EHT BSS operating channel bandwidth, learns of a number Y of fundamental channels based on the bandwidth size, to determine a meaning of an indicated bandwidth based on a number of pieces of first information #1 and the EHT BSS operating channel bandwidth, to interpret the N pieces of first information #1 to obtain maximum transmit PSDs corresponding to fundamental channels in the EHT BSS operating channel bandwidth.

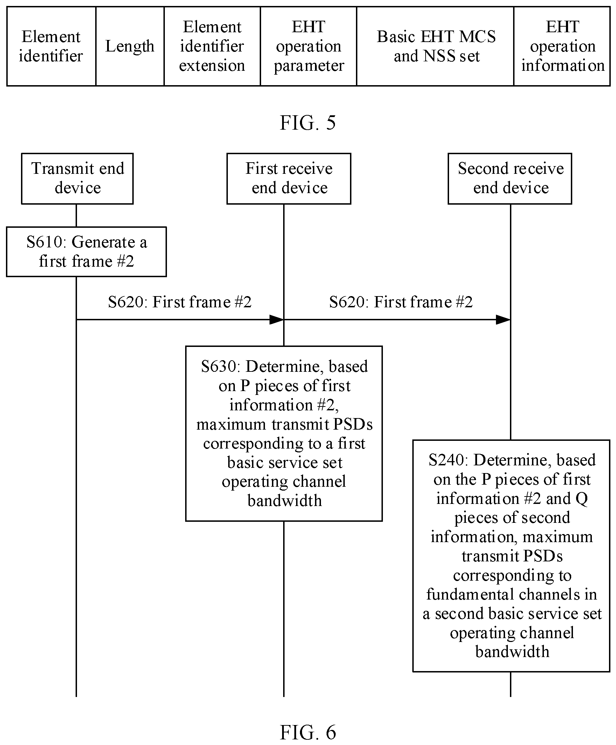

The fundamental channels in the non-EHT BSS operating channel bandwidth are consecutive. However, the EHT BSS operating channel bandwidth allows one or more fundamental channels to be punctured, that is, allows the fundamental channels to be inconsecutive. When the EHT BSS operating channel bandwidth is different from the non-EHT BSS operating channel bandwidth, the EHT BSS operating channel bandwidth and the non-EHT BSS operating channel bandwidth are indicated by different elements. For example, as mentioned above, the EHT BSS operating channel bandwidth is indicated by the EHT operation element, and the non-EHT BSS operating channel bandwidth is indicated by the HE operation element, the VHT operation element, or the HT operation element. When the EHT BSS operating channel bandwidth is the same as the non-EHT BSS operating channel bandwidth, the EHT BSS operating channel bandwidth and the non-EHT BSS operating channel bandwidth are indicated by a same element, for example, the HE operation element, the VHT operation element, or the HT operation element. For ease of understanding of this embodiment of this application, the following uses a second element indicating the EHT BSS operating channel bandwidth as an example for description. Optionally, the first frame #1 further includes the second element, and the second element may indicate a fundamental channel in the EHT BSS operating channel bandwidth. The second element may be an EHT operation element (EHT operation element). The following provides descriptions by using an example in which the second element is the EHT operation element with reference to FIG. 5.

Refer to FIG. 5. The EHT operation element may include an element identifier (element identifier) field, a length (length) field, an element identifier extension (extension element identifier) field, an EHT operation parameter (EHT operation parameter) field, a basic EHT modulation and coding scheme (modulation and coding scheme, MCS) and number of spatial stream (number of spatial stream, NSS) set (Basic EHT MCS AND NSS set) field, and an EHT operation information field. The element identifier field and the element identifier extension field identify the element. The length field indicates a total length of other fields after the length field in the EHT operation element. The EHT operation parameter field indicates control information, for example, indicates whether the EHT operation information field is present. The basic EHT MCS and NSS set field indicates an MCS supported by an EHT station in a BSS when the EHT station transmits a data unit of each number of streams. The EHT operation information field indicates a BSS operating channel bandwidth for an EHT station, and includes a channel bandwidth subfield and a disabled sub-channel bitmap field. The channel bandwidth subfield may indicate a size of the EHT BSS operating channel bandwidth, and the disabled sub-channel bitmap subfield indicates fundamental channels that are punctured in the EHT BSS operating channel bandwidth.

It may be understood that a size of the element and sizes of the fields and the subfields in the element are not limited in this application. For example, the element identifier field may occupy one octet, the length field may occupy one octet, the element identifier extension field may occupy one octet, the EHT operation parameter field may occupy one octet, the basic EHT MCS and NSS set field may occupy four octets, and the EHT operation information field may occupy zero, three, or five octets.

S220: The transmit end device sends the first frame #1 to a first receive end device and a second receive end device. Correspondingly, the first receive end device receives the first frame #1 from the transmit end device, and the second receive end device receives the first frame #1 from the transmit end device.

The transmit end device may send the first frame #1 in a broadcast manner. Therefore, a plurality of receive end devices may all receive the first frame #1, and the plurality of receive end devices may include at least one EHT station and/or at least one non-EHT station. In this embodiment of this application, the first receive end device may be a non-EHT station, and the second receive end device may be an EHT station. It should be noted that the first receive end device and the second receive end device may be alternatively receive end devices that have corresponding features and that are defined in the future. This is not particularly limited in this application. For ease of understanding of this embodiment of this application, the following provides descriptions by using an example in which the first receive end device is the non-EHT station and the second receive end device is the EHT station. The following descriptions of the non-EHT station may be applied to the first receive end device, and the following descriptions of the EHT station may be applied to the second receive end device.

S230: The first receive end device determines, based on the first X pieces of first information #1 in the N pieces of first information #1, the maximum transmit PSDs corresponding to the fundamental channels in the first basic service set operating channel bandwidth.

For example, the first receive end device receives the first frame #1. If a maximum transmit power interpretation subfield in a transmit power information field in a power transmit envelope element (that is, the first element #1) of the first frame #1 determines that the maximum transmit power field indicates a PSD, that is, when a value of the maximum transmit power interpretation subfield in the transmit power information field is 1 or 3, the first receive end device determines the number N of pieces of first information #1 based on a maximum transmit power count subfield in the transmit power information field, and N is greater than the number X of fundamental channels in the first BSS operating channel bandwidth. In this case, the first receive end device intercepts the first X pieces of first information #1 in the N pieces of first information #1, for example, reads only the first X subfields in the N subfields in the maximum transmit power field, to learn of the maximum transmit PSDs corresponding to the fundamental channels included in the first operating channel bandwidth, and ignores subsequent first information #1.

Optionally, when the maximum transmit power interpretation subfield indicates that the maximum transmit power field indicates an EIRP, that is, when a value of the maximum transmit power interpretation subfield is 0 or 2, if received N is greater than 3, the first receive end device needs only to receive a maximum transmit power subfield of 20 MHz, a maximum transmit power subfield of 40 MHz, a maximum transmit power subfield of 80 MHz, and a maximum transmit power subfield of 160 MHz, ignores other remaining maximum transmit power subfields, and determines, based on the maximum transmit power field, an EIRP corresponding to each bandwidth.

S240: The second receive end device determines, based on the N pieces of first information #1, the maximum transmit PSDs corresponding to the fundamental channels in the second basic service set operating channel bandwidth.

For example, the second receive end device receives the first frame #1. If a maximum transmit power interpretation subfield in a transmit power information field in a power transmit envelope element (that is, the first element #1) of the first frame #1 determines that the maximum transmit power field indicates a PSD, that is, when a value of the maximum transmit power interpretation subfield in the transmit power information field is 1 or 3, the first receive end device determines the number N of pieces of first information #1 based on a maximum transmit power count subfield in the transmit power information field, and N is greater than the number X of fundamental channels in the first BSS operating channel bandwidth. The first BSS operating channel bandwidth is different from the second BSS operating channel bandwidth. In this case, the second receive end device may compare values of the number N of pieces of the first information #1 and the number (that is, the first value) of the fundamental channels in the second BSS operating channel bandwidth to determine the indicated bandwidth, to determine, based on the meaning of the indicated bandwidth and the N pieces of first information #1, the maximum transmit PSDs corresponding to the fundamental channels in the second BSS operating channel bandwidth. For more specific descriptions of the indicated bandwidth, refer to the descriptions of the case 1, the case 2, and the case 3 in step S210. Details are not described herein again.

If N is less than or equal to the number X of fundamental channels in the first BSS operating channel bandwidth, the first receive device and the second receive device receive or interpret the N pieces of first information #1 in a same manner, that is, determine that the N pieces of first information #1 are maximum transmit PSDs corresponding to fundamental channels from a low frequency to a high frequency in a corresponding indicated bandwidth. For more detailed descriptions of the indicated bandwidth, refer to the descriptions of the case a and the case b in step S210. Details are not described herein again.

Optionally, when the maximum transmit power interpretation subfield indicates that the maximum transmit power field indicates an EIRP, that is, when a value of the maximum transmit power interpretation subfield is 0 or 2, if received N is greater than 4, the second receive end device needs only to receive a maximum transmit power subfield of 20 MHz, a maximum transmit power subfield of 40 MHz, a maximum transmit power subfield of 80 MHz, a maximum transmit power subfield of 160 MHz, and a maximum transmit power subfield of 320 MHz, determines an EIRP corresponding to each bandwidth based on the maximum transmit power field, and ignores other remaining maximum transmit power subfields.

Based on the technical solution, the N pieces of first information #1 are designed by defining the indicated bandwidth, so that the N pieces of first information #1 can simultaneously indicate maximum transmit PSDs corresponding to fundamental channels in two types of BSS operating channel bandwidths. Different types of receive end devices, for example, both an EHT station and a non-EHT station, can obtain, based on the N pieces of first information #1, maximum transmit PSDs corresponding to fundamental channels in their own BSS operating channel bandwidths. In this solution, a plurality of types of frames or elements may not be additionally defined to indicate maximum transmit PSDs corresponding to fundamental channels in different BSS operating channel bandwidths, so that transmission overheads are reduced when the maximum transmit PSDs corresponding to the two types of BSS operating channel bandwidths are reliably indicated.

The foregoing describes the power indication method with reference to FIG. 2 and FIG. 5. An embodiment of this application further provides another power indication method, which is different from that the X fixed pieces of first information #1 (the number of fundamental channels in the first BSS operating channel bandwidth) indicate the maximum transmit PSDs corresponding to the fundamental channels in the first BSS operating channel bandwidth in FIG. 2 to FIG. 5. In the following method, P pieces of first information #1 that are flexibly defined may indicate the maximum transmit PSDs corresponding to the fundamental channels in the first BSS operating channel bandwidth, the following describes the method with reference to FIG. 6.

FIG. 6 is a schematic flowchart of another power indication method according to an embodiment of this application.

S610: A transmit end device generates a first frame #2.

The first frame #2 includes a first element #2, the first element #2 includes P pieces of first information #2 and Q pieces of second information, the P pieces of first information #2 indicate respectively maximum transmit power spectral densities PSDs corresponding to P fundamental channels, the P fundamental channels are some or all of fundamental channels in a first basic service set operating channel bandwidth, the Q pieces of second information indicate respectively maximum transmit PSDs corresponding to fundamental channels in an indicated bandwidth excluding the P fundamental channels, and P and Q are positive integers. The indicated bandwidth is related to a value of M and a second basic service set operating channel bandwidth, the second basic service set operating channel bandwidth is different from the first basic service set operating channel bandwidth, M is equal to a sum of P and Q, and M is a positive integer.

The first element #2 further includes third information and fourth information, the third information indicates a value of P, and the fourth information indicates a value of Q.

For meanings of the transmit end device, the first element #2, the first basic service set operating channel bandwidth, the second basic service set operating channel bandwidth, and the indicated bandwidth, refer to the related descriptions in FIG. 2 to FIG. 5. Details are not described herein again. The following mainly describes the first information #2, the second information, the third information, and the fourth information.

The P pieces of first information #2 may be pieces of information carried in P subfields respectively, and the Q pieces of second information may be pieces of information carried in Q subfields respectively. When the first element #2 is a transmit power envelope element, the P subfields that carry the first information #2 may be subfields in a maximum transmit power field, and the Q subfields that carry the second information may be subfields after the subfields that carry the P pieces of first information #2 in the field. For example, Q subfields may be newly added, and Q subfields are used to carry the Q pieces of second information respectively.

Optionally, the P pieces of first information #2 are sorted sequentially in ascending order of frequencies of the corresponding fundamental channels. Optionally, the Q pieces of second information are sorted sequentially in ascending order of frequencies of the corresponding fundamental channels. Therefore, the receive end can determine, based on positions of the pieces of first information, the maximum transmit PSDs corresponding to the fundamental channels, and no additional bit is required to indicate a specific correspondence between the fundamental channels and the pieces of first information, thereby further reducing transmission overheads.

It should be noted that, because the P fundamental channels are some or all of the fundamental channels in the first BSS operating channel bandwidth, the value of P may be less than or equal to a number of all the fundamental channels in the first BSS operating channel bandwidth. In other words, in this implementation, the first information #2 whose number is less than or equal to the number of all the fundamental channels in the first BSS operating channel bandwidth may indicate the maximum transmit PSDs corresponding to the fundamental channels in the first BSS operating channel bandwidth.

For a first receive device, because some channels in the first BSS operating channel bandwidth may have no maximum transmit power PSD limits or the maximum transmit power limits corresponding to the channels have been sent previously (which remains unchanged in this case), in this implementation, P pieces of information may be designed to indicate respectively maximum transmit PSDs corresponding to the fundamental channels in the first BSS operating channel bandwidth. Therefore, transmission overheads can be reduced by reducing redundant subfields.

Maximum transmit PSDs corresponding to fundamental channels that are not in the first BSS operating channel bandwidth but in the indicated bandwidth may also be determined based on the Q pieces of second information. A fundamental channel that is neither in the first BSS operating channel bandwidth nor in the indicated bandwidth has no corresponding maximum transmit PSD.

The third information indicates a value of P, and the fourth information indicates a value of Q. It should be noted that when the first element #2 is the transmit power envelope element, and P pieces of third information are respectively carried in the P subfields in the maximum transmit power field, the third information may be carried in a maximum transmit power count subfield in the transmit power envelope element. In other words, different values of the maximum transmit power count subfield correspond to different P values. In addition, an EHT maximum transmit power count (EHT maximum transmit power count) subfield may be defined in the first element #2 to carry the fourth information. Different values of different EHT maximum transmit power count subfields may correspond to different Q values.

Optionally, the first element #2 may further include indication information, and the indication information indicates whether a number of pieces of first information #2 is equal to the number of all the fundamental channels in the first basic service set operating channel bandwidth. When the indication information indicates that the number of pieces of first information #2 is equal to the number of all the fundamental channels in the first basic service set operating channel bandwidth, the transmit end device may not need to send the third information, or the receive end device may not need to interpret the third information. A non-EHT station may obtain the P pieces of first information #2 based on the number of all the fundamental channels in the first basic service set operating channel bandwidth. In this case, the fourth information may be carried in the maximum transmit power count subfield in the transmit power envelope element.

It may be understood that meanings of the indication fields are similar to those defined in FIG. 2 to FIG. 5, and are all related to the number of pieces of information indicating the maximum transmit PSDs. In the implementations of FIG. 2 to FIG. 5, the number of pieces of information indicating the maximum transmit PSDs are represented by a number N of pieces of first information #1. In this implementation, the number of subfields indicating the maximum transmit PSDs are represented by a sum M of the number P of pieces of first information #2 and the number Q of pieces of second information. In another implementation, the fourth information indicates that a value of Q is the foregoing mentioned M. In this case, the Q pieces of second information indicate respectively maximum transmit PSDs corresponding to fundamental channels in the indicated bandwidth.

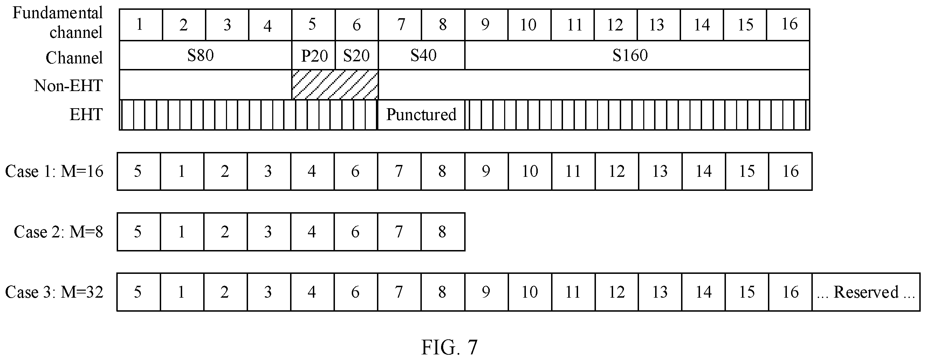

For ease of understanding of this embodiment of this application, the following describes three cases of the indicated bandwidth in this implementation with reference to FIG. 7. Refer to FIG. 7. For meanings of the fundamental channel, the channel, the non-EHT BBS operating channel bandwidth, and the EHT BSS operating channel bandwidth in FIG. 7, refer to the descriptions in FIG. 4. In this implementation, in a case 1, M is equal to a first value 16, P may be 1, and Q may be 15, that is, one subfield indicates a maximum transmit PSD corresponding to a fundamental channel 7 in the non-EHT BBS operating channel bandwidth, and other subfields indicate maximum transmit PSDs corresponding to fundamental channels in the indicated bandwidth excluding a fundamental channel 5. In a case 2, M is less than a first value, M=8, P may be 1, and Q may be 7, that is, one subfield indicates a maximum transmit PSD corresponding to a fundamental channel 5 in the non-EHT BBS operating channel bandwidth, and other subfields indicate maximum transmit PSDs corresponding to fundamental channels in the indicated bandwidth excluding a fundamental channel 7. In a case 3, M is greater than the first value, M=32, P may be 1, and Q may be 31. For a meaning of the indicated bandwidth, refer to the descriptions of the foregoing case 1 to case 5. Details are not described herein again.

S620: The transmit end device sends the first frame #2 to a first receive end device and a second receive end device. Correspondingly, the first receive end device receives the first frame #2 from the transmit end device, and the second receive end device receives the first frame #2 from the transmit end device.

For descriptions of this step, refer to the descriptions of step S220 in FIG. 2. Details are not described herein again.

S630: The first receive end device determines, based on the P pieces of first information #2, the maximum transmit PSDs corresponding to the fundamental channels in the first basic service set operating channel bandwidth.

For example, the first receive end device receives the first frame #2. If a maximum transmit power interpretation subfield in a transmit power information field in a power transmit envelope element (that is, the first element #2) of the first frame #2 determines that the maximum transmit power field indicates a PSD, that is, when a value of the maximum transmit power interpretation subfield in the transmit power information field is 1 or 3, the first receive end device determines the number P of pieces of first information #2 based on a maximum transmit power count subfield in the transmit power information field, and P is greater than 0. In this case, the first receive end device intercepts the P pieces of first information #2, for example, reads only first P subfields in the M subfields in the maximum transmit power field, to learn of the maximum transmit PSDs corresponding to the fundamental channels included in the first operating channel bandwidth, and ignores subsequent M-P subfields.

Optionally, when the maximum transmit power interpretation subfield indicates that the maximum transmit power field indicates an EIRP, that is, when a value of the maximum transmit power interpretation subfield is 0 or 2, the first receive end device determines, based on a maximum transmit power count subfield in the transmit power information field, subfields included in the maximum transmit power field, and determines, based on the maximum transmit power field, the EIRP corresponding to the channel.

S640: The second receive end device determines, based on the P pieces of first information #2 and the Q pieces of second information, the maximum transmit PSDs corresponding to the fundamental channels in the second basic service set operating channel bandwidth.

For example, the second receive end device receives the first frame #2. If a maximum transmit power interpretation subfield in a transmit power information field in a power transmit envelope element (that is, the first element #2) of the first frame #2 determines that the maximum transmit power field indicates a PSD, that is, when a value of the maximum transmit power interpretation subfield in the transmit power information field is 1 or 3, the first receive end device determines the number P of pieces of first information #2 based on a maximum transmit power count subfield in the transmit power information field, and determines the number Q of pieces of second information based on an extension (EHT) transmit power number field, and P is greater than 0. The first BSS operating channel bandwidth is different from the second BSS operating channel bandwidth. In this case, the second receive end device may compare value of a sum of P and Q and the number (that is, the first value) of fundamental channels in the second BSS operating channel bandwidth to determine the indicated bandwidth, to determine, based on the meaning of the indicated bandwidth and the P pieces of first information #2 and the Q pieces of second information, maximum transmit PSDs corresponding to some or all of the fundamental channels in the second BSS operating channel bandwidth.

Optionally, when the maximum transmit power interpretation subfield indicates that the maximum transmit power field indicates an EIRP, that is, when a value of the maximum transmit power interpretation subfield is 0 or 2, the second receive end device determines, based on a maximum transmit power count subfield in the transmit power information field, subfields included in the maximum transmit power field, and determines, based on the maximum transmit power field, the EIRP corresponding to the channel.

Based on the technical solution, the P pieces of first information #2 are defined to indicate the maximum transmit PSDs corresponding to some or all of the fundamental channels in the first BSS operating channel bandwidth, and the Q pieces of second information are defined by designing the indicated bandwidth, so that the P pieces of first information #2 and the Q pieces of second information can indicate maximum transmit PSDs corresponding to some or all of fundamental channels in the second BSS operating channel bandwidth, so that different types of receive end devices, for example, both an EHT station and a non-EHT station, can obtain, based on the first element #2, maximum transmit PSDs corresponding to fundamental channels in their own BSS operating channel bandwidths. In this solution, a plurality of types of frames or elements may not be additionally defined to indicate maximum transmit PSDs corresponding to fundamental channels in different BSS operating channel bandwidths, so that transmission overheads are reduced when the maximum transmit PSDs corresponding to the two types of BSS operating channel bandwidths are reliably indicated. In addition, the value of P is indicated based on the third information, and designing of the first information #2 is more flexible, that is, the manner of indicating the first BSS operating channel bandwidth is more flexible.

In the power indication method described in FIG. 2 to FIG. 5, the N pieces of first information #1 may be used to simultaneously indicate the maximum transmit PSDs corresponding to some or all of the fundamental channels in the first BSS operating channel bandwidth and the second BSS operating channel bandwidth. In the power indication method described in FIG. 6 and FIG. 7, the P pieces of first information #2 and the Q pieces of second information may be used to simultaneously indicate the maximum transmit PSDs corresponding to some or all of the fundamental channels in the first BSS operating channel bandwidth and the second BSS operating channel bandwidth. In a possible implementation, the foregoing two power indication methods may be used in combination. For example, the transmit end device may send, to the receive end device, information indicating whether the number of pieces of information corresponding to the fundamental channels in the first BSS operating channel bandwidth is equal to the number of the fundamental channels in the first BSS operating channel bandwidth. If the information indicates that the two numbers are equal, it may indicate that the first frame sent by the transmit end device is designed in the first indication method. If the information indicates that the two numbers are not equal, it may indicate that the first frame sent by the transmit end device is designed in the second indication method. This is not particularly limited in this application.

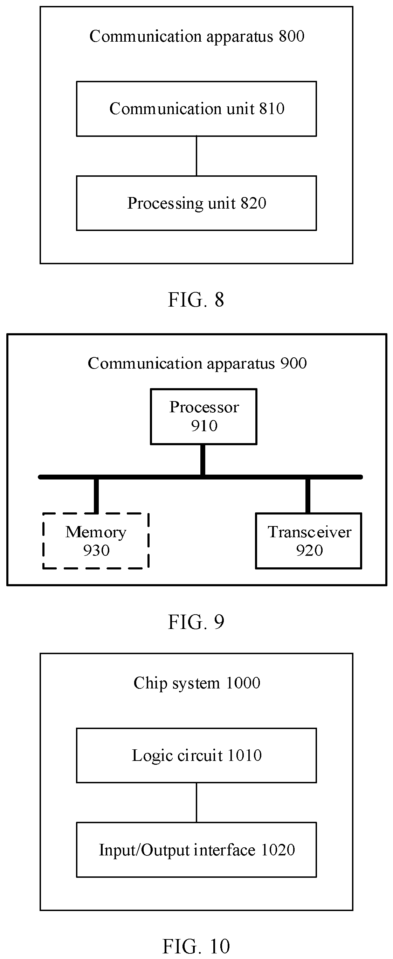

The foregoing describes, with reference to FIG. 2 to FIG. 7, the information indication method provided in embodiments of this application. The following describes, with reference to FIG. 8 to FIG. 10, a communication apparatus provided in embodiments of this application. In a possible implementation, the apparatus is configured to implement the steps or procedures corresponding to the receive end device in the foregoing method embodiments. In another possible implementation, the apparatus is configured to implement the steps or procedures corresponding to the transmit end device in the foregoing method embodiments.

FIG. 8 is a schematic block diagram of a communication apparatus 800 according to an embodiment of this application. As shown in FIG. 8, the apparatus 800 may include a communication unit 810 and a processing unit 820. The communication unit 810 may communicate with an external device, and the processing unit 820 is configured to process data. The communication unit 810 may be further referred to as a communication interface or a transceiver unit.

In a possible design, the apparatus 800 may implement the steps or procedures performed by the transmit end device in the foregoing method embodiments. The processing unit 820 is configured to perform processing-related operations of the transmit end device in the foregoing method embodiments, and the communication unit 810 is configured to perform sending-related operations of the transmit end device in the foregoing method embodiments.

In another possible design, the apparatus 800 may implement the steps or procedures performed by the first receive end device in the foregoing method embodiments. The communication unit 810 is configured to perform receiving-related operations of the first receive end device in the foregoing method embodiments, and the processing unit 820 is configured to perform processing-related operations of the first receive end device in the foregoing method embodiments.

In still another possible design, the apparatus 800 may implement the steps or procedures performed by the second receive end device in the foregoing method embodiments. The communication unit 810 is configured to perform receiving-related operations of the second receive end device in the foregoing method embodiments, and the processing unit 820 is configured to perform processing-related operations of the second receive end device in the foregoing method embodiments.

It should be understood that the apparatus 800 herein is presented in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 800 may be specifically the transmit end device in the foregoing embodiments, and may be configured to perform the procedures and/or steps corresponding to the transmit end device in the foregoing method embodiments. Alternatively, the apparatus 800 may be specifically the receive end device in the foregoing embodiments, and may be configured to perform the procedures and/or steps corresponding to the receive end device in the foregoing method embodiments. To avoid repetition, details are not described herein again.

The apparatus 800 in each of the foregoing solutions has a function of implementing the corresponding steps performed by the transmit end device in the foregoing method, or the apparatus 800 in each of the foregoing solutions has a function of implementing the corresponding steps performed by the receive end device in the foregoing method. The function may be implemented by hardware, or may be implemented by hardware executing corresponding software. The hardware or software includes one or more modules corresponding to the foregoing functions. For example, the communication unit may be replaced by a transceiver (for example, a sending unit in the communication unit may be replaced by a transmitter, and a receiving unit in the communication unit may be replaced by a receiver), and another unit such as the processing unit may be replaced by a processor, so as to separately perform a sending and receiving operation and a related processing operation in each method embodiment.

In addition, the communication unit may be alternatively a transceiver circuit (for example, may include a receiving circuit and a sending circuit), and the processing unit may be a processing circuit. In this embodiment of this application, the apparatus in FIG. 8 may be the AP or the STAin the foregoing embodiments, or may be a chip or a chip system, for example, a system on chip (system on chip, SoC). The communication unit may be an input/output circuit or a communication interface. The processing unit is a processor, a microprocessor, or an integrated circuit integrated on the chip. This is not limited herein.

FIG. 9 is a schematic block diagram of a communication apparatus 900 according to an embodiment of this application. The apparatus 900 includes a processor 910 and a transceiver 920. The processor 910 and the transceiver 920 communicate with each other through an internal connection path. The processor 910 is configured to execute instructions, to control the transceiver 920 to send a signal and/or receive a signal.

Optionally, the apparatus 900 may further include a memory 930. The memory 930 communicates with the processor 910 and the transceiver 920 through an internal connection path. The memory 930 is configured to store instructions, and the processor 910 may execute the instructions stored in the memory 930. In a possible implementation, the apparatus 900 is configured to implement procedures and steps corresponding to the transmit end device in the foregoing method embodiment. In another possible implementation, the apparatus 900 is configured to implement procedures and steps corresponding to the receive end device in the foregoing method embodiment.

It should be understood that the apparatus 900 may be specifically the transmit end device or the receive end device in the foregoing embodiments, or may be a chip or a chip system. Correspondingly, the transceiver 920 may be a transceiver circuit of the chip. This is not limited herein. Specifically, the apparatus 900 may be configured to perform the steps and/or the procedures corresponding to the transmit end device or the receive end device in the foregoing method embodiments. Optionally, the memory 930 may include a read-only memory and a random access memory, and provide instructions and data for the processor. A part of the memory may further include a non-volatile random access memory. For example, the memory may further store information of a device type. The processor 910 may be configured to execute the instructions stored in the memory. When the processor 910 executes the instructions stored in the memory, the processor 910 is configured to perform the steps and/or procedures of the method embodiment corresponding to the transmit end device or the receive end device.

In an implementation process, the steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, the steps in the foregoing method embodiments can be implemented by using a hardware integrated logical circuit in the processor, or by using instructions in a form of software. The processor may be a general-purpose processor, a digital signal processor (DSP), an application specific integrated circuit (ASIC), a field programmable gate array (FPGA) or another programmable logic device, a discrete gate or a transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps of the method disclosed with reference to embodiments of this application may be directly performed by a hardware decoding processor, or may be performed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these memories and any memory of another appropriate type.

It should be noted that when the processor is a general-purpose processor, a DSP, an ASIC, an FPGA or another programmable logic device, a discrete gate or a transistor logic device, or a discrete hardware component, the memory (storage module) may be integrated into the processor. It should be further noted that the memory described in this specification aims to include but is not limited to these memories and any memory of another proper type.

FIG. 10 is a diagram of a chip system 1000 according to an embodiment of this application. The chip system 1000 (or may also be referred to as a processing system) includes a logic circuit 1010 and an input/output interface (input/output interface) 1020.

The logic circuit 1010 may be a processing circuit in the chip system 1000. The logic circuit 1010 may be coupled and connected to a storage unit, and invoke instructions in the storage unit, so that the chip system 1000 can implement the methods and the functions in embodiments of this application. The input/output interface 1020 may be an input/output circuit in the chip system 1000, and outputs information processed by the chip system 1000, or inputs to-be-processed data or signaling to the chip system 1000 for processing.

Specifically, for example, if the chip system 1000 is installed in the transmit end device, the logic circuit 1010 is coupled to the input/output interface 1020, and the logic circuit 1010 may send a first frame through the input/output interface 1020, where the first frame may be generated by the logic circuit 1010. For another example, if the chip system 1000 is installed in the receive end device, the logic circuit 1010 is coupled to the input/output interface 1020, the logic circuit 1010 may receive a first frame through the input/output interface 1020, and the logic circuit 1010 determines a maximum transmit power PSD based on the first frame.

In a solution, the chip system 1000 is configured to implement the operations performed by the transmit end device in the foregoing method embodiments.

For example, the logic circuit 1010 is configured to implement processing-related operations performed by the transmit end device in the foregoing method embodiments, for example, the processing-related operations performed by the transmit end device in the embodiment shown in FIG. 2 to FIG. 7, and the input/output interface 1020 is configured to implement sending and/or receiving-related operations performed by the transmit end device in the foregoing method embodiments, for example, the processing-related operations performed by the transmit end device in the embodiment shown in FIG. 2 to FIG. 7.

In another solution, the chip system 1000 is configured to implement operations performed by the first receive end device in the foregoing method embodiment.

For example, the logic circuit 1010 is configured to implement processing-related operations performed by the first receive end device in the foregoing method embodiments, for example, the processing-related operations performed by the first receive end device in the embodiment shown in FIG. 2 to FIG. 7, and the input/output interface 1020 is configured to implement sending and/or receiving-related operations performed by the first receive end device in the foregoing method embodiments, for example, the processing-related operations performed by the first receive end device in the embodiment shown in FIG. 2 to FIG. 7.

In still another solution, the chip system 1000 is configured to implement operations performed by the second receive end device in the foregoing method embodiment.

For example, the logic circuit 1010 is configured to implement processing-related operations performed by the second receive end device in the foregoing method embodiments, for example, the processing-related operations performed by the second receive end device in the embodiment shown in FIG. 2 to FIG. 7, and the input/output interface 1020 is configured to implement sending and/or receiving-related operations performed by the second receive end device in the foregoing method embodiments, for example, the processing-related operations performed by the second receive end device in the embodiment shown in FIG. 2 to FIG. 7.

In addition, this application further provides a computer-readable storage medium. The computer-readable storage medium stores computer instructions. When the computer instructions are run on a computer, operations and/or procedures performed by the transmit end device or the receive end device in method embodiments of this application are performed.

This application further provides a computer program product. The computer program product includes computer program code or instructions. When the computer program code or the instructions are run on a computer, an operation and/or a procedure performed by the transmit end device or the receive end device in method embodiments of this application are performed.

In addition, this application further provides a communication system, including the transmit end device and the receive end device in embodiments of this application.

It should be further noted that the memory described in this specification aims to include but is not limited to these memories and any memory of another proper type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiments. Details are not described herein again. In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms. The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, each of the units may exist independently physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner.

It should be further understood that ordinal numerals such as "first" and "second" mentioned in embodiments of this application are used to distinguish between a plurality of objects, and are not intended to limit sizes, content, a sequence, a time sequence, priorities, importance degrees, or the like of the plurality of objects. For example, first information and second information do not indicate a difference in an information amount, content, a priority, importance, or the like.

It should be further understood that, in this application, both "when" and "if" mean that a network element performs corresponding processing in an objective situation, but do not constitute a limitation on time, do not require that the network element has a determining action during implementation, and do not mean other limitations either.

It should be further understood that, in this application, "at least one" refers to one or more, and "a plurality of" refers to two or more. "At least one item (piece) of the following" or a similar expression thereof means any combination of these items, including any combination of singular items (pieces) or plural items (pieces). For example, at least one of a, b, or c may represent a, b, c, a and b, a and c, b and c, or a, b, and c.

It should be noted that unless otherwise specified, an expression used in this application similar to an expression that "an item includes one or more of the following: A, B, and C" usually means that the item may be any one of the following: A; B; C; A and B; A and C; B and C; A, B, and C; A and A; A, A, and A; A, A, and B; A, A, and C; A, B, and B; A, C, and C; B and B; B, B, and B; B, B, and C; C and C; C, C, and C; and another combination of A, B, and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

It should be understood that the term "and/or" in this specification describes only an association relationship between associated objects and represents that three relationships may exist. For example, A and/or B may represent the following three cases: Only A exists, both A and B exist, and only B exists. A and B may be singular or plural. The character "/" generally indicates an "or" relationship between the associated objects. For example, A/B indicates A or B.

It should be further understood that in embodiments of this application, "B corresponding to A" indicates that B is associated with A, and B may be determined based on A. However, it should be further understood that determining B based on A does not mean that B is determined based only on A. B may be alternatively determined based on A and/or other information.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
generating a first frame, wherein the first frame comprises a first element, the first element comprises P pieces of first information and Q pieces of second information, the P pieces of first information indicate respectively maximum transmit power spectral densities PSDs corresponding to P fundamental channels, the P fundamental channels are some or all of fundamental channels in a first basic service set operating channel bandwidth, the Q pieces of second information indicate respectively maximum transmit PSDs corresponding to fundamental channels in an indicated bandwidth excluding the P fundamental channels, and P and Q are positive integers; the indicated bandwidth is related to a value of M and a second basic service set operating channel bandwidth, the second basic service set operating channel bandwidth is different from the first basic service set operating channel bandwidth, M is equal to a sum of P and Q, and M is a positive integer; and the first element further comprises third information and fourth information, the third information indicates a value of P, and the fourth information indicates a value of Q; and
sending the first frame.

2. The method according to claim 1, wherein fundamental channels in the second basic service set operating channel bandwidth comprise the fundamental channels in the first basic service set operating channel bandwidth.

3. The method according to claim 1 or 2, wherein the P pieces of first information are sorted sequentially in ascending order of frequencies of the corresponding fundamental channels.

4. The method according to any one of claims 1 to 3, wherein the Q pieces of second information are sorted sequentially in ascending order of frequencies of the corresponding fundamental channels.

5. The method according to any one of claims 1 to 4, wherein M is equal to a first value, the indicated bandwidth is the second basic service set operating channel bandwidth, and the first value is a number of the fundamental channels comprised in the second basic service set operating channel bandwidth.

6. The method according to any one of claims 1 to 4, wherein M is less than a first value, the indicated bandwidth is primary Z megahertz in the second basic service set operating channel bandwidth, Z is equal to M multiplied by a fundamental channel bandwidth, and the first value is a number of the fundamental channels comprised in the second basic service set operating channel bandwidth.

7. The method according to any one of claims 1 to 4, wherein M is greater than a first value, the indicated bandwidth is greater than the second basic service set operating channel bandwidth, first S pieces of information in M pieces of information in total of the P pieces of first information and the Q pieces of second information indicate respectively maximum transmit PSDs corresponding to S fundamental channels comprised in the second basic service set operating channel bandwidth, S is a positive integer, the first value is a number of the fundamental channels comprised in the second basic service set operating channel bandwidth, and S is greater than P.

8. The method according to claim 7, wherein an (S+1)^{th} piece of information to a (P+Q)^{th} piece of information in the M pieces of information in total of the P pieces of first information and the Q pieces of second information are reserved.

9. The method according to any one of claims 1 to 8, wherein a bandwidth size of the fundamental channel is 20 megahertz MHz.

10. The method according to any one of claims 1 to 9, wherein the first element further comprises a maximum transmit power interpretation field, and a value of the maximum transmit power interpretation field is 1 or 3.

11. The method according to any one of claims 1 to 10, wherein the first element is a transmit power envelope element.

12. The method according to any one of claims 1 to 11, wherein the first basic service set operating channel bandwidth is a non-extremely high throughput EHT basic service set operating channel bandwidth, and the second basic service set operating channel bandwidth is an EHT basic service set operating channel bandwidth.

13. The method according to any one of claims 1 to 12, wherein the value of M is 2 to the power of m, and m is an integer greater than or equal to 0.

14. A communication method, wherein the method comprises:
receiving a first frame, wherein the first frame comprises a first element, the first element comprises P pieces of first information and Q pieces of second information, the P pieces of first information indicate respectively maximum transmit power spectral densities PSDs corresponding to P fundamental channels, the P fundamental channels are some or all of fundamental channels in a first basic service set operating channel bandwidth, the Q pieces of second information indicate respectively maximum transmit PSDs corresponding to fundamental channels in an indicated bandwidth excluding the P fundamental channels, and P and Q are positive integers; the first element further comprises third information and fourth information, the third information indicates a value of P, and the fourth information indicates a value of Q; and the indicated bandwidth is related to a value of M and a second basic service set operating channel bandwidth, the second basic service set operating channel bandwidth is different from the first basic service set operating channel bandwidth, M is equal to a sum of P and Q, and M is a positive integer; and
determining, based on the first frame, maximum transmit PSDs corresponding to fundamental channels in the second basic service set operating channel bandwidth.

15. A communication method, wherein the method comprises:
receiving a first frame, wherein the first frame comprises a first element, the first element comprises P pieces of first information and Q pieces of second information, the P pieces of first information indicate respectively maximum transmit power spectral densities PSDs corresponding to P fundamental channels, the P fundamental channels are some or all of fundamental channels in a first basic service set operating channel bandwidth, the Q pieces of second information indicate respectively maximum transmit PSDs corresponding to fundamental channels in an indicated bandwidth excluding the P fundamental channels, and P and Q are positive integers; the first element further comprises third information and fourth information, the third information indicates a value of P, and the fourth information indicates a value of Q; and the indicated bandwidth is related to a value of M and a second basic service set operating channel bandwidth, the second basic service set operating channel bandwidth is different from the first basic service set operating channel bandwidth, M is equal to a sum of P and Q, and M is a positive integer; and
determining, based on the first frame, maximum transmit PSDs corresponding to the fundamental channels in the first basic service set operating channel bandwidth.

16. The method according to claim 14 or 15, wherein the fundamental channels in the second basic service set operating channel bandwidth comprise the fundamental channels in the first basic service set operating channel bandwidth.

17. The method according to any one of claims 14 to 16, wherein the P pieces of first information are sorted sequentially in ascending order of frequencies of the corresponding fundamental channels.

18. The method according to any one of claims 14 to 17, wherein the Q pieces of second information are sorted sequentially in ascending order of frequencies of the corresponding fundamental channels.

19. The method according to any one of claims 14 to 18, wherein M is equal to a first value, the indicated bandwidth is the second basic service set operating channel bandwidth, and the first value is a number of the fundamental channels comprised in the second basic service set operating channel bandwidth.

20. The method according to any one of claims 14 to 18, wherein M is less than a first value, the indicated bandwidth is primary Z megahertz in the second basic service set operating channel bandwidth, Z is equal to M multiplied by a fundamental channel bandwidth, and the first value is a number of the fundamental channels comprised in the second basic service set operating channel bandwidth.

21. The method according to any one of claims 14 to 18, wherein M is greater than a first value, the indicated bandwidth is greater than the second basic service set operating channel bandwidth, first S pieces of information in M pieces of information in total of the P pieces of first information and the Q pieces of second information indicate respectively maximum transmit PSDs corresponding to S fundamental channels comprised in the second basic service set operating channel bandwidth, S is a positive integer, the first value is a number of the fundamental channels comprised in the second basic service set operating channel bandwidth, and S is greater than P.

22. The method according to claim 21, wherein an (S+1)^{th} piece of information to a (P+Q)^{th} piece of information in the M pieces of information in total of the P pieces of first information and the Q pieces of second information are reserved.

23. The method according to any one of claims 14 to 22, wherein a bandwidth size of the fundamental channel is 20 megahertz MHz.

24. The method according to any one of claims 14 to 23, wherein the first element further comprises a maximum transmit power interpretation field, and a value of the maximum transmit power interpretation field is 1 or 3.

25. The method according to any one of claims 14 to 24, wherein the first element is a transmit power envelope element.

26. The method according to any one of claims 14 to 25, wherein the first basic service set operating channel bandwidth is a non-extremely high throughput EHT basic service set operating channel bandwidth, and the second basic service set operating channel bandwidth is an EHT basic service set operating channel bandwidth.

27. The method according to any one of claims 14 to 26, wherein the value of M is 2 to the power of m, and m is an integer greater than or equal to 0.

28. A communication apparatus, wherein the apparatus comprises a transceiver unit and a processing unit;
the processing unit is configured to generate a first frame, wherein the first frame comprises a first element, the first element comprises P pieces of first information and Q pieces of second information, the P pieces of first information indicate respectively maximum transmit power spectral densities PSDs corresponding to P fundamental channels, the P fundamental channels are some or all of fundamental channels in a first basic service set operating channel bandwidth, the Q pieces of second information indicate respectively maximum transmit PSDs corresponding to fundamental channels in an indicated bandwidth excluding the P fundamental channels, and P and Q are positive integers; the indicated bandwidth is related to a value of M and a second basic service set operating channel bandwidth, the second basic service set operating channel bandwidth is different from the first basic service set operating channel bandwidth, M is equal to a sum of P and Q, and M is a positive integer; and the first element further comprises third information and fourth information, the third information indicates a value of P, and the fourth information indicates a value of Q; and
the transceiver unit is configured to send the first frame.

29. A communication apparatus, wherein the apparatus comprises a transceiver unit and a processing unit;
the transceiver unit is configured to receive a first frame, wherein the first frame comprises a first element, the first element comprises P pieces of first information and Q pieces of second information, the P pieces of first information indicate respectively maximum transmit power spectral densities PSDs corresponding to P fundamental channels, the P fundamental channels are some or all of fundamental channels in a first basic service set operating channel bandwidth, the Q pieces of second information indicate respectively maximum transmit PSDs corresponding to fundamental channels in an indicated bandwidth excluding the P fundamental channels, and P and Q are positive integers; the first element further comprises third information and fourth information, the third information indicates a value of P, and the fourth information indicates a value of Q; and the indicated bandwidth is related to a value of M and a second basic service set operating channel bandwidth, the second basic service set operating channel bandwidth is different from the first basic service set operating channel bandwidth, M is equal to a sum of P and Q, and M is a positive integer; and
the processing unit is configured to determine, based on the first frame, maximum transmit PSDs corresponding to fundamental channels in the second basic service set operating channel bandwidth.

30. A communication apparatus, wherein the apparatus comprises a transceiver unit and a processing unit;
the transceiver unit is configured to receive a first frame, wherein the first frame comprises a first element, the first element comprises P pieces of first information and Q pieces of second information, the P pieces of first information indicate respectively maximum transmit power spectral densities PSDs corresponding to P fundamental channels, the P fundamental channels are some or all of fundamental channels in a first basic service set operating channel bandwidth, the Q pieces of second information indicate respectively maximum transmit PSDs corresponding to fundamental channels in an indicated bandwidth excluding the P fundamental channels, and P and Q are positive integers; the first element further comprises third information and fourth information, the third information indicates a value of P, and the fourth information indicates a value of Q; and the indicated bandwidth is related to a value of M and a second basic service set operating channel bandwidth, the second basic service set operating channel bandwidth is different from the first basic service set operating channel bandwidth, M is equal to a sum of P and Q, and M is a positive integer; and
the processing unit is configured to determine, based on the first frame, maximum transmit PSDs corresponding to the fundamental channels in the first basic service set operating channel bandwidth.

31. A communication apparatus, comprising a processor, configured to execute computer instructions stored in a memory, so that the apparatus performs the method according to any one of claims 1 to 13, the apparatus performs the method according to any one of claims 14 and 16 to 27, or the apparatus performs the method according to any one of claims 15 to 27.

32. A computer-readable storage medium, wherein the computer-readable storage medium stores computer instructions, and when the computer instructions are run on a computer, the method according to any one of claims 1 to 13 is performed, the method according to any one of claims 14 and 16 to 27 is performed, or the method according to any one of claims 15 to 27 is performed.

33. A chip, wherein the chip comprises a processor and a communication interface, and the processor reads, through the communication interface, instructions stored in a memory, to perform the method according to any one of claims 1 to 13, perform the method according to any one of claims 14 and 16 to 27, or perform the method according to any one of claims 15 to 27.

34. A computer program product, comprising computer program code, wherein when the computer program code runs on a computer, the computer is enabled to implement the method according to any one of claims 1 to 13, the computer is enabled to implement the method according to any one of claims 14 and 16 to 27, or the computer is enabled to implement the method according to any one of claims 15 to 27.

35. A communication apparatus, comprising a processor, configured to execute a computer program stored in a memory, so that the apparatus performs the method according to any one of claims 1 to 13, the apparatus performs the method according to any one of claims 14 and 16 to 27, or the apparatus performs the method according to any one of claims 15 to 27.

36. The apparatus according to claim 35, wherein the apparatus further comprises the memory.
